# EUROPEAN PATENT APPLICATION

(11) **EP 3 413 634 A1**
(43) Date of publication of application: **12.12.2018**
(21) Application number: 16892270.6
(22) Date of filing: 25.07.2016
(51) Int. Cl.: H04W 48/16, H04W 84/12

(54) **DEVICE ACCESS CONTROLLING METHOD, AND RELATED DEVICE AND SYSTEM**

(30) Priority: 29.02.2016 CN 201610113612
(71) Applicant: Huawei Technologies Co., Ltd., Longgang District Shenzhen, Guangdong 518129 (CN)
(72) Inventor: HUANG, Jisong, Shenzhen Guangdong 518129 (CN); FAN, Jiangang, Shenzhen Guangdong 518129 (CN); LIU, Zhibin, Shenzhen Guangdong 518129 (CN)
(74) Representative: Isarpatent
(86) International application number: PCT/CN2016/091570
(87) International publication number: WO 2017/148082

(57) **Abstract**

A mobile device obtains first gateway access information of a smart device. The mobile device generates a corresponding first Wireless Fidelity WiFi hotspot according to the first gateway access information. When the smart device accesses the first WiFi hotspot by using the first gateway access information, the mobile device sends second gateway access information to the smart device, so that the smart device accesses a second WiFi hotspot by using the second gateway access information. In the embodiments of the present invention, on one hand, a physical input apparatus does not need to be disposed on a smart device, and costs of the smart device are reduced. On the other hand, the smart device is connected to a target gateway according to second gateway access information sent by a mobile device, and a probability that gateway access information is maliciously intercepted is reduced.

## Description

This application claims priority to Chinese Patent Application No. 201610113612.0, filed with the Chinese Patent Office on February 29, 2016 and entitled "METHOD FOR CONTROLLING DEVICE ACCESS, AND RELATED DEVICE AND SYSTEM", which is incorporated herein by reference in its entirety.

### TECHNICAL FIELD

Embodiments of the present invention relate to the communications field, and in particular, to a method for controlling device access, and a related device and system.

### BACKGROUND

With an increasing quantity of smart home devices, a simple configuration technology of Wireless Fidelity (WiFi) becomes more important. However, a smart device having a WiFi interface lacks an input device. Consequently, network access is difficult. However, an existing simple connection technology is not secure enough. Currently, there is no standard uniform solution in the market for a smart device to access a network.

In the prior art, there are mainly the following several manners in which the smart device accesses a WiFi hotspot.

In a first manner, gateway access information is entered by using a screen of the smart device such as a Google Thermostat having a screen. By manually rotating a knob, a to-be-connected WiFi hotspot can be selected, and an operation of entering a password can be completed.

In a second manner, the smart device is used as a wireless access point (AP). After a mobile phone or a computer is connected to the AP, gateway access information is entered.

In a third manner, simple configuration is implemented in a broadcast manner. For example, after the smart device is powered on, the smart device enters a mode of "waiting for WiFi configuration". In this case, after a mobile phone selects a WiFi hotspot and is connected to the WiFi hotspot, gateway access information of the WiFi hotspot is sent to a device in a 2.4-gigahertz (GigaHertz, GHz) frequency band by means of broadcast. In this way, after receiving the gateway access information, the smart device knows a specific to-be-connected WiFi hotspot.

In a fourth manner, the smart device is used as an accessory of a computer, and is configured by using the computer. This type of product generally has a matched personal computer (PC) driver, also includes configuration software, and is connected to the computer by using a Universal Serial Bus (USB) interface. After gateway access information of a WiFi hotspot is specified in the configuration software, the smart device is removed for use.

However, the following problems still exist when the smart device accesses a WiFi hotspot in the prior art.

When the first manner is used, a touchscreen or a keyboard needs to be disposed on the smart device. In this way, costs of the smart device are increased.

When the second manner is used, an AP function of WiFi needs to be added to the smart device. However, a security mechanism is still lacked for adding the function to the smart device, and a malicious attack from the mobile phone possibly exists.

When the third manner is used, there is a potential risk in implementing simple configuration, and when a message is broadcasted, gateway access information is easily maliciously intercepted.

When the fourth manner is used, operations are relatively complex, user experience is relatively poor, and it is difficult to implement large-scale deployment.

### SUMMARY

Embodiments of the present invention provide a method for controlling device access, and a related device and system. On one hand, a physical input apparatus does not need to be disposed on a smart device, and costs of the smart device are reduced. On the other hand, the smart device is connected to a target gateway according to second gateway access information sent by a mobile device, and a probability that gateway access information is maliciously intercepted is reduced.

In view of this, a first aspect of the present invention provides a method for controlling device access, including:
A mobile device first needs to obtain first gateway access information of a smart device. The first gateway access information may be understood as a service set identifier and a password of the smart device that are set at delivery, that is, a so-called SSID and password.

The mobile device may generate a corresponding WiFi hotspot according to the first gateway access information, that is, a first Wireless Fidelity WiFi hotspot. Specifically, the mobile device is connected to a network by using the SSID and the password, and can generate the initial first WiFi hotspot after the connection succeeds.

When the smart device accesses, by using the first gateway access information that is specified at delivery, the first WiFi hotspot generated by the mobile device, the mobile device may send second gateway access information to the smart device. Apparently, the second gateway access information has content different from that of the first gateway access information, but is in a same form of an SSID and a password. Therefore, the smart device further accesses a second WiFi hotspot by using the received second gateway access information.

In this embodiment of the present invention, a method for controlling a device to access a gateway is provided. A mobile device obtains first gateway access information of a smart device. The mobile device generates a corresponding WiFi hotspot according to the first gateway access information. When the smart device accesses a first WiFi hotspot by using the first gateway access information, the mobile device sends second gateway access information to the smart device, so that the smart device accesses a second WiFi hotspot by using the second gateway access information. By using the manner, a smart device can access a gateway. On one hand, a physical input apparatus does not need to be disposed on the smart device, and costs of the smart device are reduced. On the other hand, the smart device is connected to a second WiFi hotspot according to second gateway access information sent by a mobile device. A corresponding AP is not configured at the beginning, and there is no need to receive the second gateway access information in a broadcast manner either, so that a probability that gateway access information is maliciously intercepted is reduced.

With reference to the first aspect of the embodiments of the present invention, in a first possible implementation manner, that the mobile device obtains the first gateway access information of the smart device may specifically include:

The mobile device identifies device identification information corresponding to the smart device. The device identification information may be implemented in at least one form of a two-dimensional code information form, a bar code information form, or a Near Field Communication NFC information form. In other words, a smart device may also include multiple different implementation forms of the device identification information, so as to avoid a case in which there is no standby processing solution when one information extraction manner is invalid. Therefore, the method helps improve flexibility and practicability of the solution. The device identification information includes the first gateway access information.

In addition, in this embodiment of the present invention, an implementation method in which the mobile device obtains the preset first gateway access information of the smart device is described. The preset first gateway access information may be obtained by directly scanning the device identification information on the smart device. On one hand, a manner of scanning the device identification information more caters to a user requirement and is convenient for use, and a scanning speed is relatively high. This helps improve user experience. On the other hand, it is relatively secure to store the preset first gateway access information by using the device identification information, it is not easy to maliciously tamper with the preset first gateway access information, and an information storage amount is large. This helps improve practicability of the solution.

With reference to the first aspect of the embodiments of the present invention, in a second possible implementation manner, before the mobile device sends the second gateway access information to the smart device, the method may further include:
The mobile device receives the second gateway access information entered by a user. That is, an input interface of the mobile device prompts the user to enter the second gateway access information corresponding to the second WiFi hotspot, so that the mobile device obtains a new SSID and password.

In addition, in this embodiment of the present invention, the second gateway access information corresponding to the second WiFi hotspot may be entered by the user. In this way, it may help the user to enter the second gateway access information according to practical application, and improve flexibility of the solution, and it is more convenient for the user to control access of the smart device in a new environment.

With reference to the first aspect of the embodiments of the present invention, in a third possible implementation manner, before the mobile device sends the second gateway access information to the smart device, the method may further include:
The mobile device prestores at least one piece of second gateway access information, and then may receive a gateway selection instruction sent by a user. The gateway selection instruction is an instruction that is triggered by the user and that is used for selecting one piece of second gateway access information.

The mobile device then determines, according to the gateway selection instruction, the second gateway access information corresponding to the instruction.

In addition, in this embodiment of the present invention, the second gateway access information corresponding to the second WiFi hotspot may be selected by the user from existing at least one piece of second gateway access information. In this way, there is no need for the user to manually enter the second gateway access information corresponding to a corresponding target gateway, thereby improving convenience of the solution, and improving efficiency of using the solution.

A second aspect of the present invention provides a method for controlling device access, including:
A smart device first receives first gateway access information that is specified at delivery. The first gateway access information is key information used by a mobile device to generate a corresponding WiFi hotspot. In the present invention, the WiFi hotspot corresponding to the first gateway access information is referred to as a first WiFi hotspot.

When the smart device accesses the first WiFi hotspot by using the first gateway access information, it indicates that the smart device has established a connection to the mobile device. In this case, the mobile device may send second gateway access information to the smart device, so that the smart device receives the second gateway access information. The first gateway access information and the second gateway access information are different SSIDs and passwords.

The smart device may access a second WiFi hotspot by using the second gateway access information.

In this embodiment of the present invention, a method for controlling a device to access a gateway is provided. A mobile device obtains first gateway access information of a smart device. The mobile device generates a corresponding WiFi hotspot according to the first gateway access information. When the smart device accesses a first WiFi hotspot by using the first gateway access information, the mobile device sends second gateway access information to the smart device, so that the smart device accesses a second WiFi hotspot by using the second gateway access information. By using the manner, a smart device can access a gateway. On one hand, a physical input apparatus does not need to be disposed on the smart device, and costs of the smart device are reduced. On the other hand, the smart device is connected to a second WiFi hotspot according to second gateway access information sent by a mobile device. A corresponding AP is not configured at the beginning, and there is no need to receive the second gateway access information in a broadcast manner either, so that a probability that gateway access information is maliciously intercepted is reduced.

With reference to the second aspect of the embodiments of the present invention, in a first possible implementation manner, that the smart device receives the first gateway access information may specifically include:
The smart device receives device identification information that is specified at delivery. The device identification information may be implemented in at least one form of a two-dimensional code information form, a bar code information form, or a Near Field Communication NFC information form. In other words, a smart device may also include multiple different implementation forms of the device identification information, so as to avoid a case in which there is no standby processing solution when one information extraction manner is invalid. Therefore, the method helps improve flexibility and practicability of the solution. The device identification information includes the first gateway access information.

In addition, in this embodiment of the present invention, an implementation method in which the mobile device obtains the preset first gateway access information of the smart device is described. The smart device first receives the first gateway access information that is specified by a manufacturer or a user, so that the mobile device can obtain the preset first gateway access information by directly scanning the device identification information on the smart device. On one hand, a manner of scanning the device identification information more caters to a user requirement and is convenient for use, and a scanning speed is relatively high. This helps improve user experience. On the other hand, it is relatively secure to store the preset first gateway access information by using the device identification information, it is not easy to maliciously tamper the preset first gateway access information, and an information storage amount is large. This helps improve practicability of the solution.

With reference to the second aspect of the embodiments of the present invention, in a second possible implementation manner, that the smart device receives the second gateway access information sent by the mobile device may include:
A user enters the second gateway access information by using an input interface of the mobile device, that is, a new SSID and password, so that the smart device receives the second gateway access information.

In addition, in this embodiment of the present invention, the second gateway access information corresponding to the second WiFi hotspot may be entered by the user. In this way, it may help the user to enter the second gateway access information according to practical application, and improve flexibility of the solution, and it is more convenient for the user to control access of the smart device in a new environment.

With reference to the second aspect of the embodiments of the present invention, in a third possible implementation manner, that the smart device receives the second gateway access information sent by the mobile device may specifically include:
The smart device receives a gateway selection instruction sent by a user by using the mobile device, and the gateway selection instruction is corresponding to one piece of second gateway access information, so that the smart device can determine the second gateway access information according to the gateway selection instruction.

In addition, in this embodiment of the present invention, the second gateway access information corresponding to the second WiFi hotspot may be selected by the user from existing at least one piece of second gateway access information. In this way, there is no need for the user to manually enter the second gateway access information corresponding to a corresponding target gateway, thereby improving convenience of the solution, and improving efficiency of using the solution.

With reference to any one of the second aspect of the embodiments of the present invention, or the first to the third possible implementation manners of the second aspect, in a fourth possible implementation manner, after the smart device receives the second gateway access information sent by the mobile device, the method may further include:
When the smart device is powered on again, the smart device may automatically access the first WiFi hotspot within a preset time period by using the first gateway access information. There is a correspondence between the first gateway access information and the first WiFi hotspot.

Further, in this embodiment of the present invention, when the smart device is started again, the smart device may first access the first WiFi hotspot within the preset time period by using the first gateway access information. In this way, for a smart device that has a buffer function, a step of first accessing the first WiFi hotspot by using the first gateway access information can reduce a connection time, and improves operability and practicability of the solution in practical application.

With reference to any one of the second aspect of the embodiments of the present invention, or the first to the third possible implementation manners of the second aspect, in a fifth possible implementation manner, after the smart device receives the second gateway access information sent by the mobile device, the method may further include:
The smart device may store the second gateway access information entered by the user in advance by using the mobile device.

When the smart device is started again, if the smart device fails to access the first WiFi hotspot within a preset time period by using the first gateway access information, the smart device automatically accesses the second WiFi hotspot by using the second gateway access information.

Further, in this embodiment of the present invention, when the smart device is started again, the smart device may first access the first WiFi hotspot within the preset time period by using the first gateway access information. However, when the connection fails, the smart device immediately accesses the second WiFi hotspot by using the stored second gateway access information. In this way, for a smart device that has a buffer function, a step of first accessing the second WiFi hotspot by using the second gateway access information can reduce a connection time, and improves practicability of the solution accordingly.

A third aspect of the present invention provides a mobile device, including:
an obtaining module, configured to obtain first gateway access information of a smart device;
a generation module, configured to generate a corresponding first Wireless Fidelity WiFi hotspot according to the first gateway access information obtained by the obtaining module; and
a sending module, configured to: when the smart device accesses, by using the first gateway access information, the first WiFi hotspot generated by the generation module, send second gateway access information to the smart device, so that the smart device accesses a second WiFi hotspot by using the second gateway access information.

With reference to the third aspect of the embodiments of the present invention, in a first possible implementation manner, the obtaining module includes:
an identification unit, configured to identify device identification information corresponding to the smart device, where the device identification information includes the first gateway access information; and optionally, the device identification information is at least one piece of two-dimensional code information, bar code information, or Near Field Communication NFC information.

With reference to the third aspect of the embodiments of the present invention, in a second possible implementation manner, the mobile device further includes:
a first receiving module, configured to: before the sending module sends the second gateway access information to the smart device, receive the second gateway access information entered by a user.

With reference to the first aspect of the embodiments of the present invention, in a third possible implementation manner, the mobile device further includes:
a second receiving module, configured to: before the sending module sends the second gateway access information to the smart device, receive a gateway selection instruction sent by a user; and
a determining module, configured to determine the second gateway access information according to the gateway selection instruction received by the second receiving module.

A fourth aspect of the present invention provides a smart device, including:
a first receiving module, configured to receive first gateway access information, where the first gateway access information is used by a mobile device to generate a corresponding first Wireless Fidelity WiFi hotspot;
a second receiving module, configured to: when the smart device accesses, by using the first gateway access information, the first WiFi hotspot received by the first receiving module, receive second gateway access information sent by the mobile device; and
a first access module, configured to access a second WiFi hotspot by using the second gateway access information received by the second receiving module.

With reference to the fourth aspect of the embodiments of the present invention, in a first possible implementation manner, the first receiving module includes:
a receiving unit, configured to receive device identification information, where the device identification information includes the first gateway access information; and optionally, the device identification information is at least one piece of two-dimensional code information, bar code information, or Near Field Communication NFC information.

With reference to the fourth aspect of the embodiments of the present invention, in a second possible implementation manner, the second receiving module includes:
a first receiving unit, configured to receive the second gateway access information entered by a user by using the mobile device.

With reference to the fourth aspect of the embodiments of the present invention, in a third possible implementation manner, the second receiving module includes:
a second receiving unit, configured to receive the second gateway access information corresponding to a gateway selection instruction, where the gateway selection instruction is sent by a user by using the mobile device.

With reference to any one of the fourth aspect of the embodiments of the present invention, or the first to the third possible implementation manners of the fourth aspect, in a fourth possible implementation manner, the smart device further includes:
a second access module, configured to: after the second receiving module receives the second gateway access information sent by the mobile device, when the smart device is started again, access the first WiFi hotspot within a preset time period by using the first gateway access information.

With reference to any one of the fourth aspect of the embodiments of the present invention, or the first to the third possible implementation manners of the fourth aspect, in a fifth possible implementation manner, the smart device further includes:
a storage module, configured to store the second gateway access information after the second receiving module receives the second gateway access information sent by the mobile device; and
a third access module, configured to: when the smart device is started again, if the smart device fails to access the first WiFi hotspot within a preset time period by using the first gateway access information, access, by the smart device, the second WiFi hotspot by using the second gateway access information stored in the storage module.

A fifth aspect of the present invention provides a mobile device, including: a memory, a transceiver, a processor, and a bus system, where
the memory is configured to store a program; and
the processor is configured to execute the program stored in the memory, and specific steps are as follows:
   obtaining first gateway access information of a smart device;
   generating a corresponding first Wireless Fidelity WiFi hotspot according to the first gateway access information; and
   when the smart device accesses the first WiFi hotspot by using the first gateway access information, controlling the transceiver to send second gateway access information to the smart device, so that the smart device accesses a second WiFi hotspot by using the second gateway access information.

With reference to the fifth aspect of the embodiments of the present invention, in a first possible implementation manner,
the processor is specifically configured to identify device identification information corresponding to the smart device, where the device identification information is at least one piece of two-dimensional code information, bar code information, or Near Field Communication NFC information, and the device identification information includes the first gateway access information.

With reference to the fifth aspect of the embodiments of the present invention, in a second possible implementation manner,
the processor is further configured to control the transceiver to receive the second gateway access information entered by a user.

With reference to the fifth aspect of the embodiments of the present invention, in a third possible implementation manner,
the processor is further configured to control the transceiver to receive a gateway selection instruction sent by a user; and
the processor is further configured to determine the second gateway access information according to the gateway selection instruction.

A sixth aspect of the present invention provides a smart device, including: a memory, a transceiver, a processor, and a bus system, where
the memory is configured to store a program; and
control the transceiver to receive first gateway access information, where the first gateway access information is used by a mobile device to generate a corresponding first Wireless Fidelity WiFi hotspot;
when the first WiFi hotspot is accessed by using the first gateway access information, control the transceiver to receive second gateway access information sent by the mobile device; and
access a second WiFi hotspot by using the second gateway access information.

With reference to the sixth aspect of the embodiments of the present invention, in a first possible implementation manner,
the processor controls the transceiver to receive device identification information, where the device identification information is at least one piece of two-dimensional code information, bar code information, or Near Field Communication NFC information, and the device identification information includes the first gateway access information.

With reference to the sixth aspect of the embodiments of the present invention, in a second possible implementation manner,
the processor controls the transceiver to receive the second gateway access information entered by a user by using the mobile device.

With reference to the sixth aspect of the embodiments of the present invention, in a third possible implementation manner,
the processor controls the transceiver to receive the second gateway access information corresponding to a gateway selection instruction, where the gateway selection instruction is sent by a user by using the mobile device.

With reference to any one of the sixth aspect of the embodiments of the present invention, or the first to the third possible implementation manners of the sixth aspect, in a fourth possible implementation manner,
when the smart device is started again, the processor accesses the first WiFi hotspot within a preset time period by using the first gateway access information.

With reference to any one of the sixth aspect of the embodiments of the present invention, or the first to the third possible implementation manners of the sixth aspect, in a fifth possible implementation manner,
the processor stores the second gateway access information; and
when the smart device is started again, if the smart device fails to access the first WiFi hotspot within a preset time period by using the first gateway access information, the processor accesses the second WiFi hotspot by using the second gateway access information.

A seventh aspect of the present invention provides a system for controlling device access, including: a mobile device and a smart device, where
the mobile device is the mobile device according to the third aspect, or the first, the second, or the third possible implementation manner of the third aspect; and
the smart device is the smart device according to any one of the fourth aspect, or the first to the fifth possible implementation manners of the fourth aspect.

It can be seen from the technical solutions that the embodiments of the present invention have the following advantages:

In the embodiments of the present invention, a method for controlling a device to access a gateway is provided. A mobile device obtains first gateway access information of a smart device. The mobile device generates a corresponding WiFi hotspot according to the first gateway access information. When the smart device accesses a first WiFi hotspot by using the first gateway access information, the mobile device sends second gateway access information to the smart device, so that the smart device accesses a second WiFi hotspot by using the second gateway access information. By using the manner, a smart device can access a gateway. On one hand, a physical input apparatus does not need to be disposed on the smart device, and costs of the smart device are reduced. On the other hand, the smart device is connected to a second WiFi hotspot according to second gateway access information sent by a mobile device. A corresponding AP is not configured at the beginning, and there is no need to receive the second gateway access information in a broadcast manner either, so that a probability that gateway access information is maliciously intercepted is reduced.

### BRIEF DESCRIPTION OF DRAWINGS

FIG. 1 is a schematic diagram of a basic function of a home gateway according to an embodiment of the present invention;
FIG. 2 is a schematic diagram of an embodiment of a method for controlling device access according to an embodiment of the present invention;
FIG. 3A is a schematic diagram of another embodiment of a method for controlling device access according to an embodiment of the present invention;
FIG. 3B is a schematic diagram of another embodiment of a method for controlling device access according to an embodiment of the present invention;
FIG. 4 is a flowchart of controlling device access in an application scenario according to the present invention;
FIG. 5 is a schematic diagram of an embodiment of a mobile device according to an embodiment of the present invention;
FIG. 6 is a schematic diagram of another embodiment of a mobile device according to an embodiment of the present invention;
FIG. 7 is a schematic diagram of another embodiment of a mobile device according to an embodiment of the present invention;
FIG. 8 is a schematic diagram of another embodiment of a mobile device according to an embodiment of the present invention;
FIG. 9 is a schematic diagram of an embodiment of a smart device according to an embodiment of the present invention;
FIG. 10 is a schematic diagram of another embodiment of a smart device according to an embodiment of the present invention;
FIG. 11 is a schematic diagram of another embodiment of a smart device according to an embodiment of the present invention;
FIG. 12 is a schematic diagram of another embodiment of a smart device according to an embodiment of the present invention;
FIG. 13 is a schematic diagram of another embodiment of a smart device according to an embodiment of the present invention;
FIG. 14 is a schematic diagram of another embodiment of a smart device according to an embodiment of the present invention;
FIG. 15 is a schematic structural diagram of an embodiment of a mobile device according to an embodiment of the present invention;
FIG. 16 is a schematic structural diagram of another embodiment of a mobile device according to an embodiment of the present invention;
FIG. 17 is a schematic structural diagram of an embodiment of a smart device according to an embodiment of the present invention;
FIG. 18 is a schematic structural diagram of another embodiment of a smart device according to an embodiment of the present invention; and
FIG. 19 is a schematic diagram of an embodiment of a system for controlling device access according to an embodiment of the present invention.

### DESCRIPTION OF EMBODIMENTS

Embodiments of the present invention provide a method for controlling device access, and a related device and system. On one hand, a physical input apparatus does not need to be disposed on a smart device, and costs of the smart device are reduced. On the other hand, the smart device is connected to a target gateway according to second gateway access information sent by a mobile device, and a probability that gateway access information is maliciously intercepted is reduced.

In the specification, claims, and accompanying drawings of the present invention, the terms "first", "second", "third", "fourth", and so on (if existent) are intended to distinguish between similar objects but do not necessarily indicate a specific order or sequence. It should be understood that the data termed in such a way are interchangeable in proper circumstances, so that the embodiments of the present invention described herein can be implemented in other orders than those illustrated or described herein. Moreover, the terms "include", "have" and any other variants of them mean to cover a non-exclusive inclusion, for example, a process, a method, a system, a product, or a device that includes a list of steps or units is not necessarily limited to those units, but may include other units that are not expressly listed or are inherent to such a process, method, system, product, or device.

It should be understood that the embodiments may be applied to not only the field of the Internet of Things but also a wireless sensor network (WSN). It may be understood that this solution may also be implemented in another field in which a device accesses a network. No limitation is imposed herein.

It should be understood that a smart device in the embodiments may refer to any type of device, instrument, or machine that has a computation processing capability. When a computer technology becomes increasingly advanced and inexpensive, various devices can be created. In addition to a personal computer and a tablet computer, there are many smart devices, including a medical instrument, a geological device, and a household appliance. For ease of understanding, in the embodiments, a smart household is mainly used as an example for description.

It should be understood that a mobile device in the embodiments may be a mobile device, a mobile device, a handheld device, or the like, and is a pocket-sized computing device that generally has a small display screen, a touch input, or a small keyboard. Because various types of information may be visited anytime and anywhere by using the mobile device, this type of device quickly becomes popular. For ease of understanding, a mobile phone is mainly used as an example for description in the embodiments.

The smart household is reflection of the Internet of Things due to impact of the Internet. An Internet of Things technology is used to connect various devices (such as an audio and video device, a lighting system, curtain control, air-conditioning control, a security and protection system, a digital theater system, a video server, a movie box system, or an Internet appliance) in a home, so as to provide various functions and means such as household appliance control, lighting control, telephone remote control, indoor and outdoor remote control, security alarming, environmental monitoring, heating, ventilation and air conditioning control, infrared forwarding, and programmable timing control. Compared with an ordinary household, the smart household not only has a conventional function of residing, but also has a function of building, network communication, an information appliance, and device automation, so as to provide an all-round information exchange function, and even reduce money for various resource fees.

The smart household mainly includes an information appliance and a home gateway.

The information appliance is an intelligent electronic device, is a product obtained after networking, informatization, and smartening of a conventional household electronic device, and can access the Internet as quickly as the personal computer does, and the information appliance can be remotely accessed, supervised, and monitored. Solutions of networking the electronic device may be classified into two types. One type of solution is directly implementing a network communications protocol (Transmission Control Protocol/Internet Protocol, TCP/IP) stack on the electronic device, so as to connect the electronic device to a network. This may be implemented by running an embedded operating system on a micro control unit (Micro Control Unit, MCU)/microprocessor (Microprocessor Unit, MPU). The other type of solution is connecting the electronic device to a network by using a gateway after communication conversion.

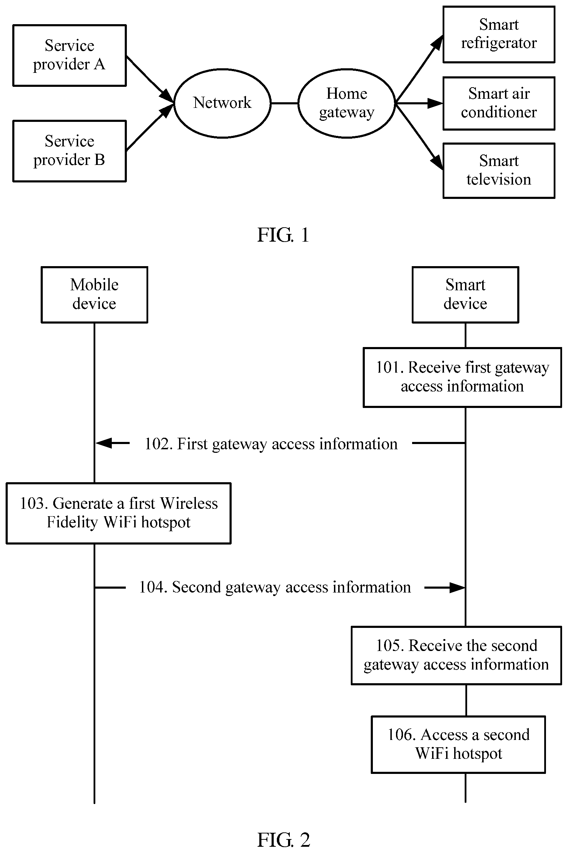

The home gateway is a bridge for a network-based household system to connect various information appliances inside a home and various services outside the home, and the home gateway is a core of a network-based smart household system. A function of the home gateway is as follows: Inside the home, the home gateway connects various devices inside the home by using a local area network; outside the home, the home gateway connects various service providers by using the Internet. As shown in FIG. 1, FIG. 1 is a schematic diagram of a basic function of a home gateway according to an embodiment of the present invention. The home gateway may associate various household appliances such as a smart refrigerator, a smart air conditioner, and a smart television, and associate various service providers such as a service provider A and a service provider B by using a network. As a physical interface by which all external access networks are connected to the inside of the home and by which an internal network of the home is connected to the outside, the home gateway may implement exchange between information inside the home and information outside the home, so that a residential user can obtain a platform of various home services (including an existing service and a service that possibly emerges in the future).

Essentially, the home gateway is a combination of a household modem and a router, and introduces a function of dynamic transfer of a new-type service and a function of remote management and upgrading of a system. The home gateway may be implemented by using various household devices, for example, a smart refrigerator or a smart air conditioner, a set-top box, a modem in a digital subscriber line, a VoIP phone, and a dedicated home gateway. Actually, any broadband network terminal apparatus may be changed to a home gateway after an embedded server is added to the apparatus. Necessity to introduce the home gateway may be mainly considered from the following two points:
(1) From a top-bottom perspective, when user equipment is not changed, a network operator and a service provider can dynamically provide a new service.
(2) From a bottom-up perspective, a user may dynamically connect, by using an autodiscover program, a new apparatus to both a home network and the Internet.

Referring to FIG. 2, one embodiment of a method for controlling device access in an embodiment of the present invention includes the following steps.

101. A smart device receives first gateway access information, where the first gateway access information is used by a mobile device to generate a corresponding first Wireless Fidelity WiFi hotspot.

In this embodiment, the smart device receives in advance the first gateway access information that is specified by a manufacturer or a user, and the first gateway access information is used by the smart device to access a WiFi hotspot.

User equipment such as a mobile phone may convert a received general packet radio service (General Packet Radio Service, GPRS), 3rd generation mobile telecommunications (The 3rd Generation Telecommunication, 3G), or 4th generation mobile telecommunications (The 4th Generation Telecommunication, 4G) signal into a WiFi signal, and send the WiFi signal. In this case, the mobile phone becomes a WiFi hotspot, and the mobile phone can be used as a hotspot only if the mobile phone has an AP function.

An AP is equivalent to a bridge that connects a wired network and a wireless network. A main function of the AP is connecting all clients in the wireless network, and connecting the wireless network to an Ethernet. Most wireless APs support functions such as multi-user access, data encryption, and multi-rate sending, and some products even provide a complete wireless network management function. For a wireless local area network in a small area such as a home and an office, generally, only one wireless AP is required to implement wireless access of all computers.

The preset first gateway access information may be specifically a service set identifier (Service Set Identifier, SSID) and a password (password, Password). An SSID technology may be used to divide one wireless local area network into several sub-networks that require different identity authentication. Each sub-network requires independent identity authentication. Only a user whose identity authentication succeeds can access a corresponding sub-network, so as to prevent an unauthorized user from accessing the network. The password is a password for connecting to an AP.

The mobile device may generate a WiFi hotspot according to the obtained preset SSID and password. The WiFi hotspot has an association relationship with the SSID and the password that are corresponding to the smart device. That is, the smart device may be connected to the WiFi hotspot of the mobile device by using the preset first gateway access information.

102. The mobile device obtains the first gateway access information of the smart device.

In this embodiment, that the mobile device obtains the first gateway access information of the smart device may be specifically that the mobile device obtains the preset SSID and password of the smart device.

103. The mobile device generates the corresponding first Wireless Fidelity WiFi hotspot according to the first gateway access information.

In this embodiment, after obtaining the first gateway access information of the smart device, the mobile device generates the corresponding first WiFi hotspot according to the first gateway access information. Specifically, the mobile device is connected to a network such as a 3G network, a 4G network, or a home network by using the preset SSID and password. After the connection succeeds, the initial first WiFi hotspot is generated.

104. When the smart device accesses the first WiFi hotspot by using the first gateway access information, the mobile device sends second gateway access information to the smart device, so that the smart device accesses a second WiFi hotspot by using the second gateway access information.

In this embodiment, if the smart device accesses the first WiFi hotspot by using the first gateway access information, it indicates that the smart device has already established a connection to the mobile device. In this case, the mobile device may send, to the smart device, the second gateway access information corresponding to the second WiFi hotspot. Specifically, the second gateway access information may be specified by using an application program of the mobile device, so that the smart device can access the second WiFi hotspot according to the received second gateway access information.

105. When the smart device accesses the first WiFi hotspot by using the first gateway access information, the smart device receives the second gateway access information sent by the mobile device.

In this embodiment, if the smart device accesses the first WiFi hotspot by using the first gateway access information, the smart device receives the second gateway access information that is sent by the mobile device by using the application program. The second gateway access information may be an SSID and a password that are corresponding to the second WiFi hotspot.

106. The smart device accesses the second WiFi hotspot by using the second gateway access information.

In this embodiment, the smart device accesses, by using the received second gateway access information, the second WiFi hotspot corresponding to the second gateway access information. After accessing the second WiFi hotspot, the smart device may be connected to a network corresponding to the second WiFi hotspot. The network may be a home network, or may be another preset network.

In this embodiment of the present invention, a method for controlling a device to access a gateway is provided. A mobile device obtains first gateway access information of a smart device. The mobile device generates a corresponding WiFi hotspot according to the first gateway access information. When the smart device accesses a first WiFi hotspot by using the first gateway access information, the mobile device sends second gateway access information to the smart device, so that the smart device accesses a second WiFi hotspot by using the second gateway access information. By using the manner, a smart device can access a gateway. On one hand, a physical input apparatus does not need to be disposed on the smart device, and costs of the smart device are reduced. On the other hand, the smart device is connected to a second WiFi hotspot according to second gateway access information sent by a mobile device. A corresponding AP is not configured at the beginning, and there is no need to receive the second gateway access information in a broadcast manner either, so that a probability that gateway access information is maliciously intercepted is reduced.

Optionally, on the basis of the embodiment corresponding to FIG. 2, in a first optional embodiment of the method for controlling device access provided in this embodiment of the present invention, that the mobile device obtains the first gateway access information of the smart device may include:
identifying, by the mobile device, device identification information corresponding to the smart device, where the device identification information is at least one piece of two-dimensional code information, bar code information, or Near Field Communication NFC information, and the device identification information includes the first gateway access information.

That a smart device receives first gateway access information may include:
receiving, by the smart device, the device identification information, where the device identification information is at least one piece of two-dimensional code information, bar code information, or Near Field Communication NFC information, and the device identification information includes the first gateway access information.

In this embodiment, a possible implementation manner in which the mobile device obtains the preset first gateway access information of the smart device may be as follows: The mobile device directly scans the device identification information on the smart device, and the device identification information includes the preset first gateway access information, that is, the SSID and the password. The corresponding device identification information on the smart device is preset by the manufacturer or the user, and may be attached to the smart device or specified in the smart device, so as to facilitate scanning of the user by using the mobile device.

It should be noted that the device identification information on the smart device may be specifically information included in two-dimensional code or information included in a bar code, or may be information stored in a Near Field Communication (Near Field Communication, NFC) chip, or may be identification information in another form. No limitation is imposed herein.

The mobile device may identify the device identification information on the smart device by using scanning software. Specifically, the user downloads the scanning software by using the mobile device, and installs the scanning software. When two-dimensional code or a bar code needs to be scanned, the two-dimensional code or the bar code may be scanned provided that the scanning software is started, so as to obtain the information. The mobile device needs to have a camera. A pixel of the camera has little impact on two-dimensional code or bar code scanning, but a higher pixel of the camera produces a better effect because an identification rate is relatively improved.

However, an NFC technology is evolved from non-contact radio frequency identification (Radio Frequency Identification, RFID), and the NFC is a short-range high-frequency radio technology, and may use an active reading mode and a passive reading mode.

As information is transferred in the RFID, information in the NFC is also transferred in a manner of electromagnetic inductive coupling of a radio frequency part in a spectrum, but there is an extremely great difference between the RFID and the NFC. First, the NFC is a technology that provides a secure and rapid wireless connection, and a transmission range of the NFC is less than that of the RFID. The transmission range of the RFID may be up to several meters and even dozens of meters. However, because the NFC uses a special signal attenuation technology, compared with the RFID, the NFC is characterized by a short range, high bandwidth, low power consumption, and the like. Second, the NFC is compatible with an existing non-contact smartcard technology, and has currently become a formal standard that is supported by an increasing quantity of mainstream manufacturers. Third, the NFC is also a short-range connection protocol, and provides secure and automatic communication between devices. Compared with another connection manner in a wireless world, the NFC is a short-range private communication manner.

An NFC chip is built in the smart device, and the mobile device may identify the NFC chip, and obtain, by using information transmitted by the NFC chip, the first gateway access information included in the NFC chip.

It should be noted that the device identification information is at least one piece of two-dimensional code information, bar code information, or Near Field Communication NFC information. In other words, a smart device may also include different implementation forms of the device identification information, so as to avoid a case in which there is no standby processing solution when one information extraction manner is invalid. Therefore, the method helps improve flexibility and practicability of the solution.

In addition, in this embodiment of the present invention, an implementation method in which the mobile device obtains the preset first gateway access information of the smart device is described. The preset first gateway access information may be obtained by directly scanning the device identification information on the smart device. On one hand, a manner of scanning the device identification information more caters to a user requirement and is convenient for use, and a scanning speed is relatively high. This helps improve user experience. On the other hand, it is relatively secure to store the preset first gateway access information by using the device identification information, it is not easy to maliciously tamper with the preset first gateway access information, and an information storage amount is large. This helps improve practicability of the solution.

For ease of understanding, second gateway access information corresponding to a target gateway may be obtained in two manners. The following describes the method for controlling device access in this embodiment of the present invention from a perspective of interaction between the mobile device and the smart device.
1. A user enters the second gateway access information.

Optionally, on the basis of the embodiment corresponding to FIG. 2, in a second optional embodiment of the method for controlling device access provided in this embodiment of the present invention, before the mobile device sends the second gateway access information to the smart device, the method may further include:
receiving, by the mobile device, the second gateway access information entered by the user.

That the smart device receives the second gateway access information sent by the mobile device may include:
receiving, by the smart device, the second gateway access information entered by the user by using the mobile device.

In this embodiment, before the mobile device sends, to the smart device, the second gateway access information corresponding to the second WiFi hotspot, the user may first enter the second gateway access information by using the mobile device. That is, the user may manually enter, by using an input interface of the mobile device, the SSID and the password that are corresponding to the second WiFi hotspot.

Specifically, the input interface of the mobile device prompts the user to enter the corresponding second gateway access information at a specified position. The user manually enters, according to the prompt, the second gateway access information at the specified position, so as to implement a connection to a new WiFi hotspot, that is, the second WiFi hotspot.

Because in practical application, a smart household may be moved to different places to work, a case in which different areas use different networks may occur. Accordingly, the second gateway access information corresponding to a new network is manually entered, and the mobile device generates the second WiFi hotspot, so that the smart device can access the second WiFi hotspot, and further access the new network.

In addition, in this embodiment of the present invention, the second gateway access information corresponding to the second WiFi hotspot may be entered by the user. In this way, it may help the user to enter the second gateway access information according to practical application, and improve flexibility of the solution, and it is more convenient for the user to control access of the smart device in a new environment.

2. A user selects the second gateway access information from existing gateway access information.

Optionally, on the basis of the embodiment corresponding to FIG. 2, in a third optional embodiment of the method for controlling device access provided in this embodiment of the present invention, before the mobile device sends the second gateway access information to the smart device, the method may further include:
receiving, by the mobile device, a gateway selection instruction sent by the user; and
determining, by the mobile device, the second gateway access information according to the gateway selection instruction.

That the smart device receives the second gateway access information sent by the mobile device may include:
receiving, by the smart device, the second gateway access information corresponding to the gateway selection instruction, where the gateway selection instruction is sent by the user by using the mobile device.

In this embodiment, before the mobile device sends, to the smart device, the second gateway access information corresponding to the second WiFi hotspot, the user may select the second gateway access information corresponding to the second WiFi hotspot on an operating interface of the mobile device. Generally, the second gateway access information displayed on the operating interface is information corresponding to a connected WiFi hotspot.

Specifically, the mobile device prestores at least one piece of second gateway access information, or finds at least one piece of second gateway access information, and displays the at least one piece of second gateway access information on the interface of the mobile device. The user selects one piece of at least one piece of the second gateway access information, and initiates the gateway selection instruction corresponding to the information, so that the mobile device determines, according to the network selection instruction initiated by the user, the second gateway access information corresponding to the target gateway.

The smart device receives the second gateway access information, and accesses the target gateway according to the second gateway access information.

In addition, in this embodiment of the present invention, the second gateway access information corresponding to the second WiFi hotspot may be selected by the user from existing at least one piece of second gateway access information. In this way, there is no need for the user to manually enter the second gateway access information corresponding to a corresponding target gateway, thereby improving convenience of the solution, and improving efficiency of using the solution.

However, in practical application, each time the smart device is started, the smart device may be automatically connected to a WiFi hotspot. Specifically, in this embodiment of the present invention, there are the following two common implementation manners.

Optionally, on the basis of any one of the embodiment corresponding to FIG. 2, or the first to the third optional embodiments corresponding to FIG. 2, in a fourth optional embodiment of the method for controlling device access provided in this embodiment of the present invention, after the smart device receives the second gateway access information sent by the mobile device, the method may further include:
when the smart device is started again, accessing, by the smart device, the first WiFi hotspot within a preset time period by using the first gateway access information.

In this embodiment, a connection manner used when the smart device is powered on again is described.

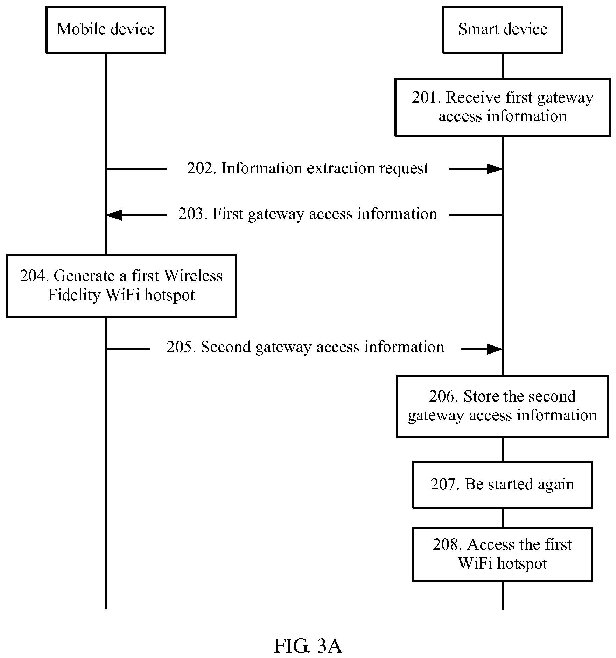

Referring to FIG. 3A, FIG. 3A is a schematic diagram of another embodiment of a method for controlling device access according to an embodiment of the present invention. In step 201, the smart device first receives the first gateway access information that is preset by the manufacturer or the user. In step 202, the mobile device may send an information extraction request to the smart device, where the information extraction request is used to extract the first gateway access information of the smart device. In step 203, the smart device returns the first gateway access information in a data stream form to the mobile device according to the information extraction request initiated by the mobile device. Specifically, the smart device may identify the device identification information on the smart device, so as to transfer the information extraction request, and accordingly obtains the first gateway access information returned by the smart device. Therefore, as indicated by step 204, the mobile device generates the first WiFi hotspot according to the first gateway access information, so that the smart device can access the first WiFi hotspot. In step 205, if the smart device needs to access a new network, the user may further send the second gateway access information to the smart device by using the mobile device. At this point, the smart device can be connected to the first WiFi hotspot or the second WiFi hotspot. In addition, as indicated by step 206, a storage chip inside the smart device may store the first WiFi hotspot, the second WiFi hotspot, a connection relationship between the first gateway access information and the first WiFi hotspot, and a connection relationship between the second gateway access information and the second WiFi hotspot. When the smart device is started again in step 207, as indicated by step 208, the smart device may first automatically access the first WiFi hotspot within the preset time period by using the first WiFi hotspot that is stored in the storage chip and by using the connection relationship that is between the first gateway access information and the first WiFi hotspot and that is stored in the storage chip.

The preset time period may be 5 seconds or 10 seconds, or may be another proper time period. No limitation is imposed herein.

Further, in this embodiment of the present invention, when the smart device is started again, the smart device may first access the first WiFi hotspot within the preset time period by using the first gateway access information. In this way, for a smart device that has a buffer function, a step of first accessing the first WiFi hotspot by using the first gateway access information can reduce a connection time, and improves operability and practicability of the solution in practical application.

Optionally, on the basis of any one of the embodiment corresponding to FIG. 2, or the first to the third optional embodiments corresponding to FIG. 2, in a fifth optional embodiment of the method for controlling device access provided in this embodiment of the present invention, after the smart device receives the second gateway access information sent by the mobile device, the method may further include:
storing, by the smart device, the second gateway access information; and
when the smart device is started again, if the smart device fails to access the first WiFi hotspot within a preset time period by using the first gateway access information, accessing, by the smart device, the second WiFi hotspot by using the second gateway access information.

In this embodiment, a connection manner used when the smart device is powered on again is described.

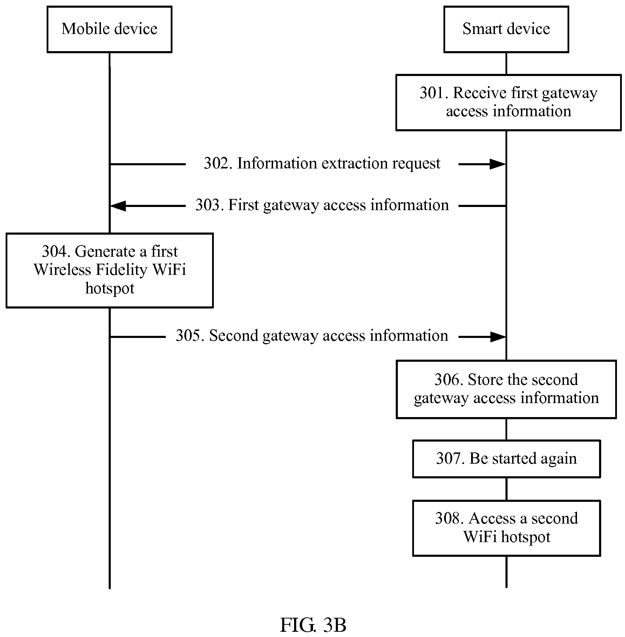

Referring to FIG. 3B, FIG. 3B is a schematic diagram of another embodiment of a method for controlling device access according to an embodiment of the present invention. In step 301, the smart device first receives the first gateway access information that is preset by the manufacturer or the user. In step 302, the mobile device may send an information extraction request to the smart device, where the information extraction request is used to extract the first gateway access information of the smart device. In step 303, the smart device returns the first gateway access information in a data stream form to the mobile device according to the information extraction request initiated by the mobile device. Specifically, the smart device may identify the device identification information on the smart device, so as to transfer the information extraction request, and accordingly obtains the first gateway access information returned by the smart device. Therefore, as indicated by step 304, the mobile device generates the first WiFi hotspot according to the first gateway access information. In step 305, if the smart device needs to access a new network, the user may further send the second gateway access information to the smart device by using the mobile device. At this point, the smart device can be connected to the first WiFi hotspot or the second WiFi hotspot. In addition, as indicated by step 306, a storage chip inside the smart device may store the first WiFi hotspot, the second WiFi hotspot, a connection relationship between the first gateway access information and the first WiFi hotspot, and a connection relationship between the second gateway access information and the second WiFi hotspot. When the smart device is started again in step 307, as indicated by step 308, the smart device may automatically access the first WiFi hotspot within the preset time period by using the first WiFi hotspot that is stored in the storage chip and by using the connection relationship that is between the first gateway access information and the first WiFi hotspot and that is stored in the storage chip. However, if the smart device cannot be connected to the first WiFi hotspot within the preset time period, the smart device accesses the second WiFi hotspot by using the stored second gateway access information and connection relationship between the second gateway access information and the second WiFi hotspot.

The preset time period is the same as the preset time period indicated in the foregoing embodiment, and may be 5 seconds or 10 seconds, or may be another proper time period. No limitation is imposed herein.

Further, in this embodiment of the present invention, when the smart device is started again, the smart device may first access the first WiFi hotspot within the preset time period by using the first gateway access information. However, when the connection fails, the smart device immediately accesses the second WiFi hotspot by using the stored second gateway access information. In this way, for a smart device that has a buffer function, a step of first accessing the second WiFi hotspot by using the second gateway access information can reduce a connection time, and improves practicability of the solution accordingly.

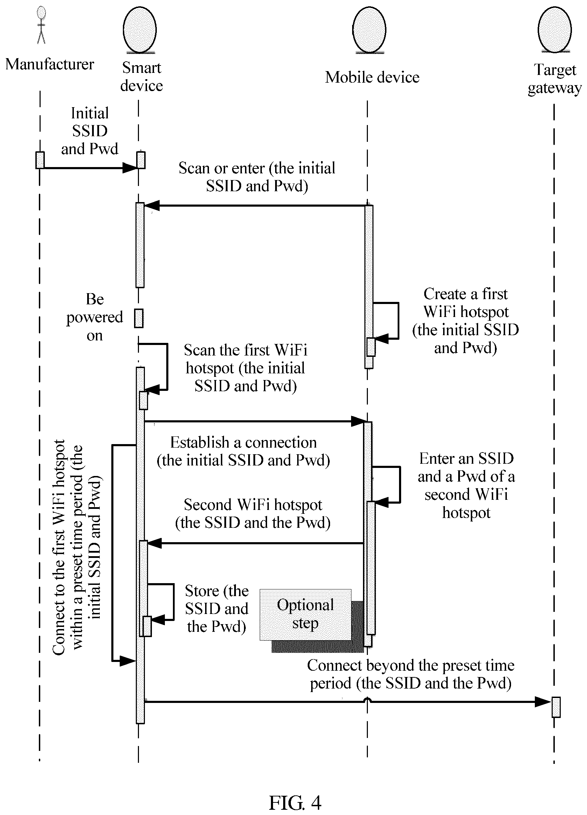

For ease of understanding, the following describes in detail a method for controlling device access in the present invention by using a specific application scenario. Referring to FIG. 4, FIG. 4 is a flowchart of controlling device access in an application scenario according to the present invention.

Specifically, a manufacturer provides an initial SSID and password to a smart device, that is, an initial SSID and Pwd in the diagram. The initial SSID and password may be implemented in a form of two-dimensional code, a bar code, or the like. When the smart device needs to be connected to a WiFi hotspot, a user uses a mobile device to scan device identification information such as two-dimensional code or a bar code on the smart device, or directly enters the initial SSID and the initial password that are corresponding to the smart device.

After obtaining the initial SSID and password, the mobile device establishes a first WiFi hotspot corresponding to the initial SSID and password. After the smart device is started for the first time, the smart device may be first connected to the first WiFi hotspot by using the initial SSID and password. After the connection succeeds, the user may enter or select, by using software in the mobile device, a new SSID and password that are corresponding to a second WiFi hotspot, and send the new SSID and the new password to the smart device.

When the smart device is started again, if the smart device fails to be automatically connected to the first WiFi hotspot within a preset time period (assumed to be 10 seconds) by using the initial SSID and password, the smart device is connected to the second WiFi hotspot by using the new SSID and password. At this point, WiFi hotspot accessing of the smart device is completed.

Optionally, when receiving the new SSID and password that are sent by the mobile device, the smart device may store the new SSID and password. That is, a smart device may store not only the initial SSID and password that are set at delivery, but also the new SSID and password that are entered by the user subsequently, so that when the smart device is started again, the smart device can automatically attempt to access the first WiFi hotspot first, and then attempt to access the corresponding second WiFi hotspot.

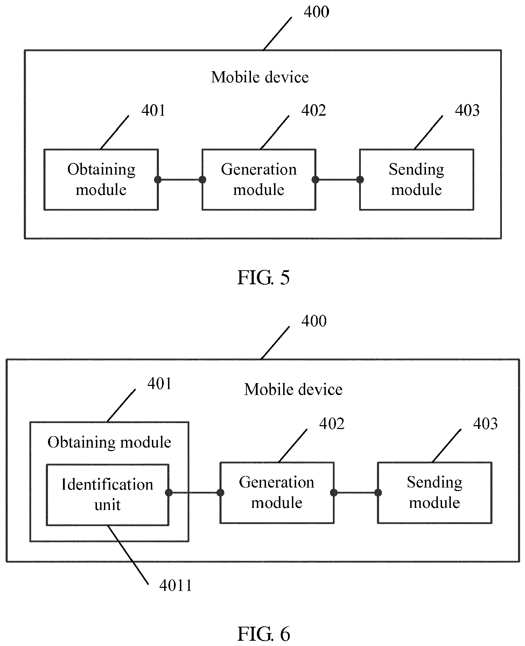

The following describes in detail a mobile device in the present invention. Referring to FIG. 5, a mobile device in an embodiment of the present invention includes:
an obtaining module 401, configured to obtain first gateway access information of a smart device;
a generation module 402, configured to generate a corresponding first Wireless Fidelity WiFi hotspot according to the first gateway access information obtained by the obtaining module 401; and
a sending module 403, configured to: when the smart device accesses, by using the first gateway access information, the first WiFi hotspot generated by the generation module 402, send second gateway access information to the smart device, so that the smart device accesses a second WiFi hotspot by using the second gateway access information.

In this embodiment, an obtaining module 401 obtains first gateway access information of a smart device. A generation module 402 generates a corresponding first Wireless Fidelity WiFi hotspot according to the first gateway access information obtained by the obtaining module 401. When the smart device accesses, by using the first gateway access information, the first WiFi hotspot generated by the generation module 402, a sending module 403 sends second gateway access information to the smart device, so that the smart device accesses a second WiFi hotspot by using the second gateway access information.

In the embodiments of the present invention, a method for controlling a device to access a gateway is provided. A mobile device obtains first gateway access information of a smart device. The mobile device generates a corresponding WiFi hotspot according to the first gateway access information. When the smart device accesses a first WiFi hotspot by using the first gateway access information, the mobile device sends second gateway access information to the smart device, so that the smart device accesses a second WiFi hotspot by using the second gateway access information. By using the manner, a smart device can access a gateway. On one hand, a physical input apparatus does not need to be disposed on the smart device, and costs of the smart device are reduced. On the other hand, the smart device is connected to a second WiFi hotspot according to second gateway access information sent by a mobile device. A corresponding AP is not configured at the beginning, and there is no need to receive the second gateway access information in a broadcast manner either, so that a probability that gateway access information is maliciously intercepted is reduced.

Referring to FIG. 6, another embodiment of a mobile device in an embodiment of the present invention includes:
an obtaining module 401, configured to obtain first gateway access information of a smart device;
a generation module 402, configured to generate a corresponding first Wireless Fidelity WiFi hotspot according to the first gateway access information obtained by the obtaining module 401; and
a sending module 403, configured to: when the smart device accesses, by using the first gateway access information, the first WiFi hotspot generated by the generation module 402, send second gateway access information to the smart device, so that the smart device accesses a second WiFi hotspot by using the second gateway access information.

The obtaining module 401 includes:
an identification unit 4011, configured to identify device identification information corresponding to the smart device, where the device identification information is at least one piece of two-dimensional code information, bar code information, or Near Field Communication NFC information, and the device identification information includes the first gateway access information.

In addition, in this embodiment of the present invention, an implementation method in which the mobile device obtains the preset first gateway access information of the smart device is described. The preset first gateway access information may be obtained by directly scanning the device identification information on the smart device. On one hand, a manner of scanning the device identification information more caters to a user requirement and is convenient for use, and a scanning speed is relatively high. This helps improve user experience. On the other hand, it is relatively secure to store the preset first gateway access information by using the device identification information, it is not easy to maliciously tamper with the preset first gateway access information, and an information storage amount is large. This helps improve practicability of the solution.

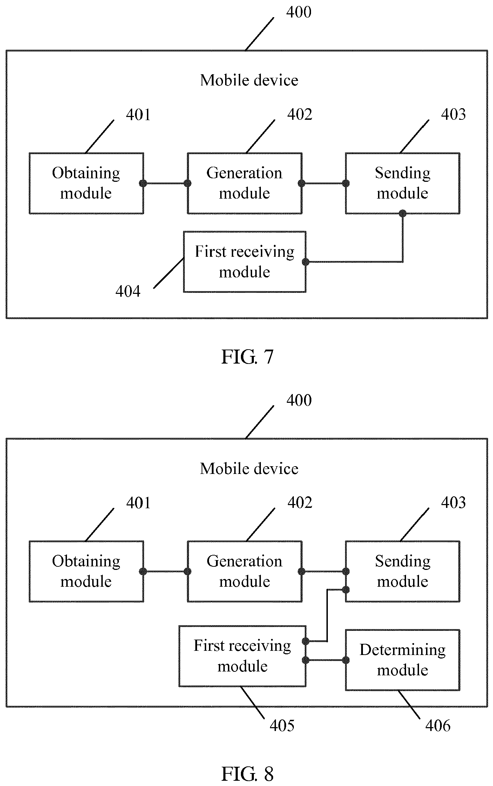

Referring to FIG. 7, another embodiment of a mobile device in an embodiment of the present invention includes:
an obtaining module 401, configured to obtain first gateway access information of a smart device;
a generation module 402, configured to generate a corresponding first Wireless Fidelity WiFi hotspot according to the first gateway access information obtained by the obtaining module 401;
a first receiving module 404, configured to: before a sending module 403 sends second gateway access information to the smart device, receive the second gateway access information entered by a user; and
the sending module 403, configured to: when the smart device accesses, by using the first gateway access information, the first WiFi hotspot generated by the generation module 402, send the second gateway access information to the smart device, so that the smart device accesses a second WiFi hotspot by using the second gateway access information.

In addition, in this embodiment of the present invention, the second gateway access information corresponding to the second WiFi hotspot may be entered by the user. In this way, it may help the user to enter the second gateway access information according to practical application, and improve flexibility of the solution, and it is more convenient for the user to control access of the smart device in a new environment.

Referring to FIG. 8, another embodiment of a mobile device in an embodiment of the present invention includes:
an obtaining module 401, configured to obtain first gateway access information of a smart device;
a generation module 402, configured to generate a corresponding first Wireless Fidelity WiFi hotspot according to the first gateway access information obtained by the obtaining module 401;
a second receiving module 405, configured to: before a sending module 403 sends second gateway access information to the smart device, receive a gateway selection instruction sent by a user;
a determining module 406, configured to determine the second gateway access information according to the gateway selection instruction received by the second receiving module 405; and
the sending module 403, configured to: when the smart device accesses, by using the first gateway access information, the first WiFi hotspot generated by the generation module 402, send the second gateway access information to the smart device, so that the smart device accesses a second WiFi hotspot by using the second gateway access information.

In addition, in this embodiment of the present invention, the second gateway access information corresponding to the second WiFi hotspot may be selected by the user from existing at least one piece of second gateway access information. In this way, there is no need for the user to manually enter the second gateway access information corresponding to a corresponding target gateway, thereby improving convenience of the solution, and improving efficiency of using the solution.

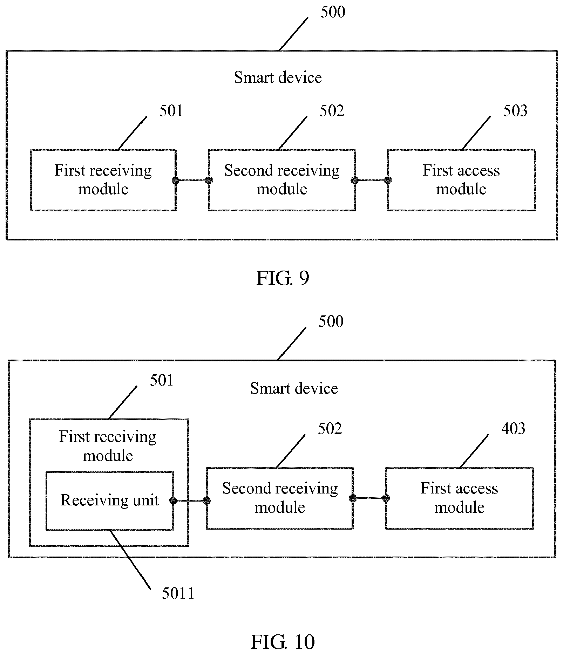

The foregoing describes in detail a mobile device in the present invention. The following describes in detail an embodiment of the present invention from a perspective of a smart device. Referring to FIG. 9, a smart device in an embodiment of the present invention includes:
a first receiving module 501, configured to receive first gateway access information, where the first gateway access information is used by a mobile device to generate a corresponding first Wireless Fidelity WiFi hotspot;
a second receiving module 502, configured to: when the smart device accesses, by using the first gateway access information, the first WiFi hotspot received by the first receiving module 501, receive second gateway access information sent by the mobile device; and
a first access module 503, configured to access a second WiFi hotspot by using the second gateway access information received by the second receiving module 502.

In this embodiment, a first receiving module 501 receives first gateway access information, where the first gateway access information is used by a mobile device to generate a corresponding first Wireless Fidelity WiFi hotspot. When a smart device accesses, by using the first gateway access information, the first WiFi hotspot received by the first receiving module 501, a second receiving module 502 receives second gateway access information sent by the mobile device. A first access module 403 accesses a second WiFi hotspot by using the second gateway access information received by the second receiving module 502.

In the embodiments of the present invention, a method for controlling a device to access a gateway is provided. A smart device receives first gateway access information, where the first gateway access information is used by a mobile device to generate a corresponding first Wireless Fidelity WiFi hotspot. When the smart device accesses the first WiFi hotspot by using the first gateway access information, the smart device receives second gateway access information sent by the mobile device, and the smart device accesses a second WiFi hotspot by using the second gateway access information. By using the manner, a smart device can access a gateway. On one hand, a physical input apparatus does not need to be disposed on the smart device, and costs of the smart device are reduced. On the other hand, the smart device is connected to a second WiFi hotspot according to second gateway access information sent by a mobile device. A corresponding AP is not configured at the beginning, and there is no need to receive the second gateway access information in a broadcast manner either, so that a probability that gateway access information is maliciously intercepted is reduced.

Referring to FIG. 10, another embodiment of a smart device in an embodiment of the present invention includes:
a first receiving module 501, configured to receive first gateway access information, where the first gateway access information is used by a mobile device to generate a corresponding first Wireless Fidelity WiFi hotspot;
a second receiving module 502, configured to: when the smart device accesses, by using the first gateway access information, the first WiFi hotspot received by the first receiving module 501, receive second gateway access information sent by the mobile device; and
a first access module 503, configured to access a second WiFi hotspot by using the second gateway access information received by the second receiving module 502.

The first receiving module 501 includes:
a receiving unit 5011, configured to receive device identification information, where the device identification information is at least one piece of two-dimensional code information, bar code information, or Near Field Communication NFC information, and the device identification information includes the first gateway access information.

In addition, in this embodiment of the present invention, an implementation method in which the mobile device obtains the preset first gateway access information of the smart device is described. The smart device first receives the first gateway access information that is specified by a manufacturer or a user, so that the mobile device can obtain the preset first gateway access information by directly scanning the device identification information on the smart device. On one hand, a manner of scanning the device identification information more caters to a user requirement and is convenient for use, and a scanning speed is relatively high. This helps improve user experience. On the other hand, it is relatively secure to store the preset first gateway access information by using the device identification information, it is not easy to maliciously tamper with the preset first gateway access information, and an information storage amount is large. This helps improve practicability of the solution.

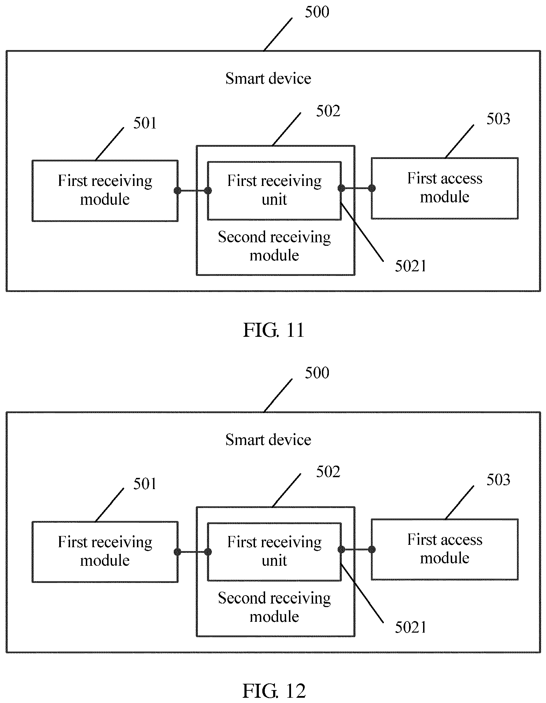

Referring to FIG. 11, another embodiment of a smart device in an embodiment of the present invention includes:
a first receiving module 501, configured to receive first gateway access information, where the first gateway access information is used by a mobile device to generate a corresponding first Wireless Fidelity WiFi hotspot;
a second receiving module 502, configured to: when the smart device fails to access, by using the first gateway access information, the first WiFi hotspot received by the first receiving module 501, receive second gateway access information sent by the mobile device; and
a first access module 503, configured to access a second WiFi hotspot by using the second gateway access information received by the second receiving module 502.

The second receiving module 502 includes:
a first receiving unit 5021, configured to receive the second gateway access information entered by a user by using the mobile device.

In addition, in this embodiment of the present invention, the second gateway access information corresponding to the second WiFi hotspot may be entered by the user. In this way, it may help the user to enter the second gateway access information according to practical application, and improve flexibility of the solution, and it is more convenient for the user to control access of the smart device in a new environment.

Referring to FIG. 12, another embodiment of a smart device in an embodiment of the present invention includes:
a first receiving module 501, configured to receive first gateway access information, where the first gateway access information is used by a mobile device to generate a corresponding first Wireless Fidelity WiFi hotspot;
a second receiving module 502, configured to: when the smart device accesses, by using the first gateway access information, the first WiFi hotspot received by the first receiving module 501, receive second gateway access information sent by the mobile device; and
a first access module 503, configured to access a second WiFi hotspot by using the second gateway access information received by the second receiving module 502.

The second receiving module 502 includes:
a second receiving unit 5022, configured to receive the second gateway access information corresponding to a gateway selection instruction, where the gateway selection instruction is sent by a user by using the mobile device.

In addition, in this embodiment of the present invention, the second gateway access information corresponding to the second WiFi hotspot may be selected by the user from existing at least one piece of second gateway access information. In this way, there is no need for the user to manually enter the second gateway access information corresponding to a corresponding target gateway, thereby improving convenience of the solution, and improving efficiency of using the solution.

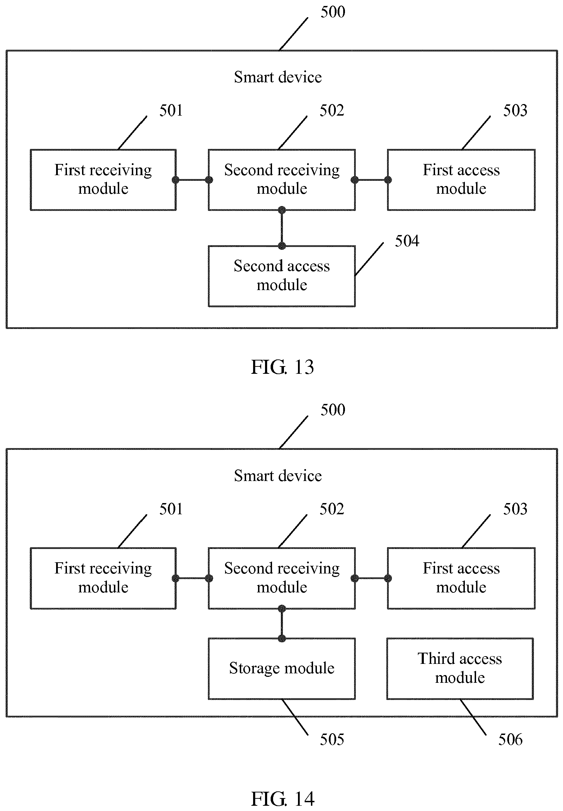

Referring to FIG. 13, another embodiment of a smart device in an embodiment of the present invention includes:
a first receiving module 501, configured to receive first gateway access information, where the first gateway access information is used by a mobile device to generate a corresponding first Wireless Fidelity WiFi hotspot;
a second receiving module 502, configured to: when the smart device accesses, by using the first gateway access information, the first WiFi hotspot received by the first receiving module 501, receive second gateway access information sent by the mobile device;
a second access module 504, configured to: after the second receiving module 502 receives the second gateway access information sent by the mobile device, when the smart device is started again, access the first WiFi hotspot within a preset time period by using the first gateway access information; and
a first access module 503, configured to access a second WiFi hotspot by using the second gateway access information received by the second receiving module 502.

Further, in this embodiment of the present invention, when the smart device is started again, the smart device may first access the first WiFi hotspot within the preset time period by using the first gateway access information. In this way, for a smart device that has a buffer function, a step of first accessing the first WiFi hotspot by using the first gateway access information can reduce a connection time, and improves operability and practicability of the solution in practical application.

Referring to FIG. 14, another embodiment of a smart device in an embodiment of the present invention includes:
a first receiving module 501, configured to receive first gateway access information, where the first gateway access information is used by a mobile device to generate a corresponding first Wireless Fidelity WiFi hotspot;
a second receiving module 502, configured to: when the smart device accesses, by using the first gateway access information, the first WiFi hotspot received by the first receiving module 501, receive second gateway access information sent by the mobile device;
a storage module 505, configured to store the second gateway access information after the second receiving module receives the second gateway access information sent by the mobile device;
a third access module 506, configured to: when the smart device is started again, if the smart device fails to access the first WiFi hotspot within a preset time period by using the first gateway access information, access, by the smart device, a second WiFi hotspot by using the second gateway access information stored in the storage module 505; and
a first access module 503, configured to access the second WiFi hotspot by using the second gateway access information received by the second receiving module 502.

Further, in this embodiment of the present invention, when the smart device is started again, the smart device may first access the first WiFi hotspot within the preset time period by using the first gateway access information. However, when the connection fails, the smart device immediately accesses the second WiFi hotspot by using the stored second gateway access information. In this way, for a smart device that has a buffer function, a step of first accessing the second WiFi hotspot by using the second gateway access information can reduce a connection time, and improves practicability of the solution accordingly.

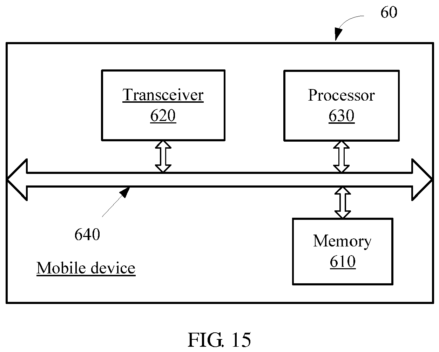

FIG. 15 is a schematic structural diagram of a mobile device 60 according to an embodiment of the present invention. The mobile device 60 may include a memory 610, a transceiver 620, a processor 630, and a bus system 640.

The memory 610 may include a read-only memory and a random access memory, and provides an instruction and data to the processor 630. A part of the memory 610 may further include a non-volatile random access memory (Non-Volatile Random Access Memory, NVRAM).

The memory 610 stores the following elements: an executable module or a data structure, or a subset of an executable module or a data structure, or an extended set of an executable module or a data structure.

Operation instructions include various operation instructions, and are used to implement various operations.

An operating system includes various system programs, and is used to implement various basic services and process hardware-based tasks.

The transceiver 620 is an apparatus for signal conversion, and generally refers to an optical fiber transceiver. After the optical fiber transceiver emerges, mutual conversion is performed on a twisted-pair electrical signal and an optical signal, so to ensure smooth transmission of a data packet between an electrical signal network and an optical signal network .

The transceiver 620 in this embodiment of the present invention is configured to:
when a smart device accesses a first WiFi hotspot by using first gateway access information, send second gateway access information to the smart device, so that the smart device accesses a second WiFi hotspot by using the second gateway access information.

The processor 630 in this embodiment of the present invention is configured to:
obtain the first gateway access information of the smart device; and
generate the corresponding first Wireless Fidelity WiFi hotspot according to the first gateway access information.

The processor 630 controls an operation of the mobile device 60, and the processor 630 may also be referred to as a central processing unit (Central Processing Unit, CPU). In specific application, all components of the mobile device 60 are coupled together by using the bus system 640. The bus system 640 may include a power supply bus, a control bus, a status signal bus, and the like in addition to a data bus. However, for clear description, various buses are marked as the bus system 640 in the diagram.

The methods disclosed in the embodiments of the present invention may be applied to the processor 630, or implemented by the processor 630. The processor 630 may be an integrated circuit chip, and have a signal processing capability. In an implementation process, the steps in the methods may be performed by using an integrated logic circuit of hardware in the processor 630 or an instruction in a form of software. The processor 630 may be a general purpose processor, a digital signal processor (Digital Signal Processing, DSP), an application-specific integrated circuit (Application Specific Intergrated Circuit, ASIC), a field-programmable gate array (Field-Programmable Gate Array, FPGA) or another programmable logical device, a discrete gate or a transistor logical device, or a discrete hardware component, and may implement or perform the methods, steps, and logical block diagrams disclosed in the embodiments of the present invention. The general-purpose processor may be a microprocessor, or the processor may be any conventional processor, or the like. The steps of the methods disclosed with reference to the embodiments of the present invention may be directly performed by a hardware decoding processor, or performed by a combination of hardware in a decoding processor and a software module. The software module may be located in a mature storage medium in the art, such as a random access memory, a flash memory, a read-only memory, a programmable read-only memory, an electrically erasable programmable memory, or a register. The storage medium is located in the memory 610. The processor 630 reads information from the memory 610, and completes the steps of the methods in combination with the hardware of the processor 630.

Optionally, the processor 630 is specifically configured to:
identify device identification information corresponding to the smart device, where the device identification information includes the first gateway access information.

Optionally, the processor 630 is specifically configured to:
control the transceiver 620 to receive the second gateway access information entered by a user.

Optionally, the processor 630 is specifically configured to:
control the transceiver 620 to receive a gateway selection instruction sent by a user; and
determine the second gateway access information according to the gateway selection instruction.

Related descriptions of FIG. 15 may be understood with reference to related descriptions and effects of the method in FIG. 2, and details are not described herein again.

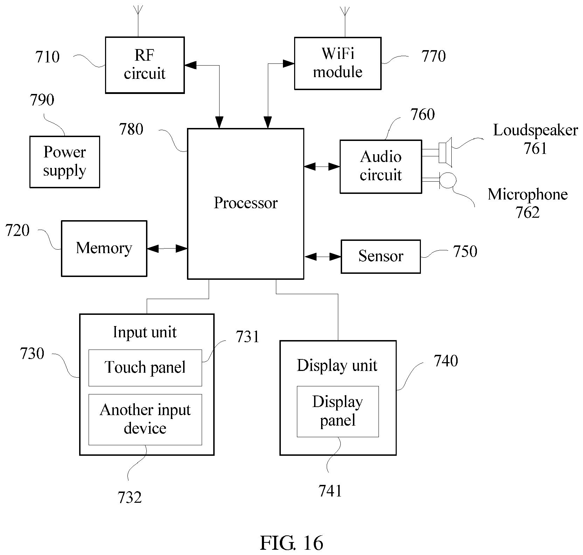

An embodiment of the present invention provides another mobile device that is shown in FIG. 16. For ease of description, only a part related to this embodiment of the present invention is shown. For specific technical details that are not disclosed, refer to a method corresponding to this embodiment of the present invention. The terminal may be any terminal device, including: a mobile phone, a tablet computer, a personal digital assistant (Personal Digital Assistant, PDA), a point of sales (Point of Sales, POS), a vehicle-mounted computer, or the like, and for example, the terminal is a mobile phone.

FIG. 16 shows a block diagram of a partial structure of a mobile phone related to the terminal provided in this embodiment of the present invention. Referring to FIG. 16, the mobile phone includes components such as a radio frequency (Radio Frequency, RF) circuit 710, a memory 720, an input unit 730, a display unit 740, a sensor 750, an audio circuit 760, a Wireless Fidelity (wireless fidelity, WiFi) module 770, a processor 780, and a power supply 790. Persons skilled in the art may understand that the structure of the mobile phone shown in FIG. 16 does not constitute any limitation on the mobile phone, and instead, the mobile phone may include components more or fewer than those shown in the diagram, or combine some components, or have a different component arrangement.

The following describes the components of the mobile phone in detail with reference to FIG. 16.

The RF circuit 710 may be configured to: receive and send a signal in an information receiving or sending process or a call process, and in particular, after receiving downlink information of a base station, send the downlink information to the processor 780 for processing; and in addition, send uplink data of the mobile phone to the base station. Generally, the RF circuit 710 includes but is not limited to an antenna, at least one amplifier, a transceiver, a coupler, a low noise amplifier (Low Noise Amplifier, LNA), or a duplexer. In addition, the RF circuit 710 may further communicate with a network and another device by means of wireless communication. The wireless communication may use any communications standard or protocol, which includes but is not limited to a Global System for Mobile Communications (Global System of Mobile communication, GSM), a general packet radio service (General Packet Radio Service, GPRS), Code Division Multiple Access (Code Division Multiple Access, CDMA), Wideband Code Division Multiple Access (Wideband Code Division Multiple Access, WCDMA), Long Term Evolution (Long Term Evolution, LTE), an email, or a short message service (Short Messaging Service, SMS).

The memory 720 may be configured to store a software program and a module. The processor 780 runs the software program and the module that are stored in the memory 720, so as to perform various function applications of the mobile phone and data processing. The memory 720 may mainly include a program storage area and a data storage area. The program storage area may store an operating system, an application program (such as a sound play function or an image play function) that is required by at least one function, and the like. The data storage area may store data (such as audio data or a phonebook) that is created according to use of the mobile phone, and the like. In addition, the memory 720 may include a high-speed random access memory, and may further include a nonvolatile memory, such as at least one magnetic disk storage component, a flash memory component, or another volatile solid-state storage component.

The input unit 730 may be configured to: receive entered digital or character information, and generate key signal input related to user setting and function control of the mobile phone. Specifically, the input unit 730 may include a touch panel 731 and another input device 732. The touch panel 731 is also referred to as a touchscreen, can collect a touch operation (for example, an operation of a user on the touch panel 731 or near the touch panel 731 by using any proper object or accessory, such as a finger or a stylus) of the user on or near the touch panel 731, and drive a corresponding connected apparatus according to a preset program. Optionally, the touch panel 731 may include two parts: a touch detection apparatus and a touch controller. The touch detection apparatus detects a touch position of a user, detects a signal brought by a touch operation, and transfers the signal to the touch controller. The touch controller receives touch information from the touch detection apparatus, converts the touch information into coordinates of a touch point, and sends the coordinates of the touch point to the processor 780, and can receive and execute a command sent by the processor 780. In addition, the touch panel 731 may be implemented by using multiple types such as a resistive type, a capacitive type, an infrared ray, and a surface acoustic wave. The input unit 730 may include the another input device 732 in addition to the touch panel 731. Specifically, the another input device 732 may include but is not limited to one or more of a physical keyboard, a function key (such as a volume control key or an on/off key), a trackball, a mouse, or an operating lever.

The display unit 740 may be configured to display information entered by the user or information provided to the user, and various menus of the mobile phone. The display unit 740 may include a display panel 741. Optionally, the display panel 741 may be configured in a form of a liquid crystal display (Liquid Crystal Display, LCD), an organic light-emitting diode (Organic Light-Emitting Diode, OLED), or the like. Further, the touch panel 731 may cover the display panel 741. When detecting a touch operation on or near the touch panel 731, the touch panel 731 transfers the touch operation to the processor 780 to determine a type of a touch event, and then the processor 780 provides corresponding visual output on the display panel 741 according to the type of the touch event. In FIG. 16, the touch panel 731 and the display panel 741 are used as two independent components to implement input and input functions of the mobile phone. However, in some embodiments, the touch panel 731 and the display panel 741 may be integrated to implement the input and output functions of the mobile phone.

The mobile phone may further include at least one sensor 750, such as a light sensor, a motion sensor, or another sensor. Specifically, the light sensor may include an ambient light sensor and a proximity sensor. The ambient light sensor may adjust luminance of the display panel 741 according to brightness of ambient light, and the proximity sensor may turn off the display panel 741 and/or backlight when the mobile phone moves to an ear. As one type of a motion sensor, an accelerometer sensor may detect values of accelerations in all directions (generally, three axes), can detect a value and a direction of the gravity in a static state, and can be used for an application that identifies a mobile phone posture (such as screen orientation, a related game, or magnetometer posture calibration), a function related to vibration identification (such as a pedometer or a stroke), and the like. For another sensor, such as a gyroscope, a barometer, a hygrometer, a thermometer, or an infrared sensor, that can be further disposed on the mobile phone, details are not described herein.

The audio circuit 760, a loudspeaker 761, and a microphone 762 may provide an audio interface between the user and the mobile phone. The audio circuit 760 may transmit, to the loudspeaker 761, an electrical signal converted from received audio data, and the loudspeaker 761 converts the electrical signal into a sound signal for output. On the other hand, the microphone 762 converts a collected sound signal into an electrical signal, and the audio circuit 760 converts the electrical signal into audio data upon receipt of the electrical signal, and outputs the audio data to the processor 780 for processing. Then, the audio data is sent to, for example, another mobile phone, by using the RF circuit 710, or the audio data is output to the memory 720 for further processing.

WiFi belongs to a short-range wireless transmission technology. The mobile phone may help, by using the WiFi module 770, the user to receive and send an email, browse a web page, visit streaming media, and the like. The WiFi module 770 provides wireless broadband Internet access to the user. Although the WiFi module 770 is shown in FIG. 7, it may be understood that the WiFi module 770 is not a mandatory component of the mobile phone, and may be omitted according to a requirement without changing the essence of the present invention.

The processor 780 is a control center of the mobile phone, is connected to each part of the entire mobile phone by using various interfaces and lines, and by running or executing the software program or the software module or both that is stored in the memory 720 and by invoking data stored in the memory 720, performs various functions of the mobile phone and data processing, so as to perform overall monitoring on the mobile phone. Optionally, the processor 780 may include one or more processing units. Preferably, an application processor and a modulation and demodulation processor may be integrated into the processor 780. The application processor mainly processes an operating system, a user interface, an application program, and the like, and the modulation and demodulation processor mainly processes wireless communication. It may be understood that the modulation and demodulation processor may not be integrated into the processor 780.

The mobile phone further includes the power supply 790 (such as a battery) that supplies power to each component. Preferably, the power supply may be logically connected to the processor 780 by using a power management system, so as to implement a management function such as charging, discharging, and power consumption by using the power management system.

Though not shown, the mobile phone may further include a camera, a Bluetooth module, and the like, and details are not described herein.

In this embodiment of the present invention, the processor 780 included in the terminal further has the following functions:
obtaining first gateway access information of a smart device;
generating a corresponding first Wireless Fidelity WiFi hotspot according to the first gateway access information; and
when the smart device accesses the first WiFi hotspot by using the first gateway access information, controlling the WiFi module 770 to send second gateway access information to the smart device, so that the smart device accesses a second WiFi hotspot by using the second gateway access information.

Optionally, the processor 780 is further configured to:
identify device identification information corresponding to the smart device, where the device identification information includes the first gateway access information. Optionally, the device identification information is at least one piece of two-dimensional code information, bar code information, or Near Field Communication NFC information.

Optionally, the processor 780 is further configured to:
control the WiFi module 770 to receive the second gateway access information entered by a user.

Optionally, the processor 780 is further configured to:
control the WiFi module 770 to receive a gateway selection instruction sent by a user; and
determine the second gateway access information according to the gateway selection instruction.

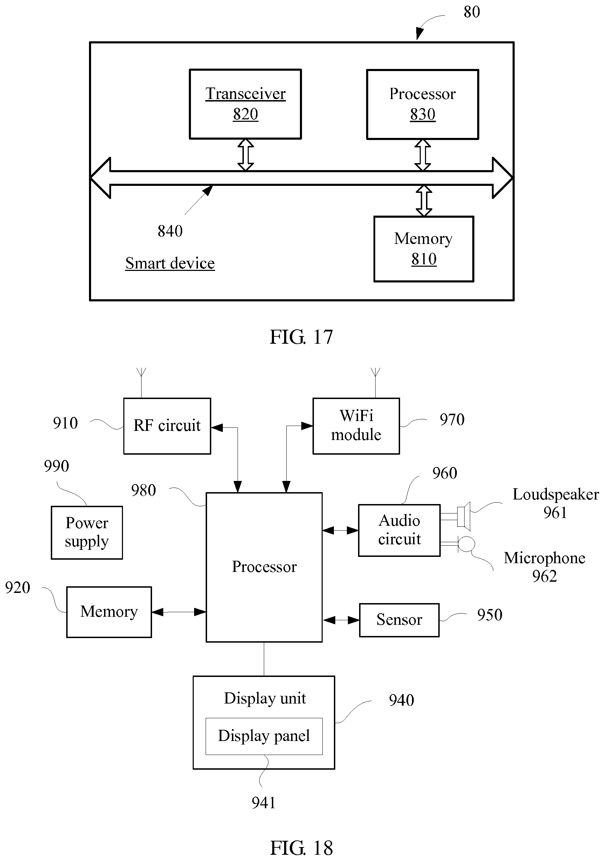

FIG. 17 is a schematic structural diagram of a smart device 80 according to an embodiment of the present invention. The smart device 80 may include a memory 810, a transceiver 820, a processor 830, and a bus system 840.

The memory 810 may include a read-only memory and a random access memory, and provides an instruction and data to the processor 830. A part of the memory 810 may further include a non-volatile random access memory (Non-Volatile Random Access Memory, NVRAM).

The memory 810 stores the following elements: an executable module or a data structure, or a subset of an executable module or a data structure, or an extended set of an executable module or a data structure.

Operation instructions include various operation instructions, and are used to implement various operations.

An operating system includes various system programs, and is used to implement various basic services and process hardware-based tasks.

The transceiver 820 is an apparatus for signal conversion, and generally refers to an optical fiber transceiver. After the optical fiber transceiver emerges, mutual conversion is performed on a twisted-pair electrical signal and an optical signal, so to ensure smooth transmission of a data packet between the two networks.

The transceiver 820 in this embodiment of the present invention is configured to:
receive first gateway access information, where the first gateway access information is used by a mobile device to generate a corresponding first Wireless Fidelity WiFi hotspot; and
when the smart device accesses the first WiFi hotspot by using the first gateway access information, receive second gateway access information sent by the mobile device.

The processor 830 in this embodiment of the present invention is configured to:
control the transceiver 820 to receive the first gateway access information, where the first gateway access information is used by the mobile device to generate the corresponding first Wireless Fidelity WiFi hotspot;
when the smart device accesses the first WiFi hotspot by using the first gateway access information, control the transceiver 820 to receive the second gateway access information sent by the mobile device; and
access a second WiFi hotspot by using the second gateway access information.

The processor 830 controls an operation of the smart device 80, and the processor 830 may also be referred to as a central processing unit (Central Processing Unit, CPU). The memory 810 may include a read-only memory and a random access memory, and provides an instruction and data to the processor 830. A part of the memory 810 may further include an NVRAM. In specific application, all components of the smart device 80 are coupled together by using the bus system 840. The bus system 840 may include a power supply bus, a control bus, a status signal bus, and the like in addition to a data bus. However, for clear description, various buses are marked as the bus system 840 in the diagram.

The methods disclosed in the embodiments of the present invention may be applied to the processor 830, or implemented by the processor 830. The processor 830 may be an integrated circuit chip, and have a signal processing capability. In an implementation process, the steps in the methods may be performed by using an integrated logic circuit of hardware in the processor 830 or an instruction in a form of software. The processor 830 may be a general purpose processor, a digital signal processor (Digital Signal Processing, DSP), an application-specific integrated circuit (Application Specific Intergrated Circuit, ASIC), a field-programmable gate array (Field-Programmable Gate Array, FPGA) or another programmable logical device, a discrete gate or a transistor logical device, or a discrete hardware component, and may implement or perform the methods, steps, and logical block diagrams disclosed in the embodiments of the present invention. The general-purpose processor may be a microprocessor, or the processor may be any conventional processor, or the like. The steps of the methods disclosed with reference to the embodiments of the present invention may be directly performed by a hardware decoding processor, or performed by a combination of hardware in a decoding processor and a software module. The software module may be located in a mature storage medium in the art, such as a random access memory, a flash memory, a read-only memory, a programmable read-only memory, an electrically erasable programmable memory, or a register. The storage medium is located in the memory 810. The processor 830 reads information from the memory 810, and completes the steps of the methods in combination with the hardware of the processor 830.

Optionally, the processor 830 is specifically configured to:
control the transceiver 820 to receive device identification information, where the device identification information includes the first gateway access information. Optionally, the device identification information is at least one piece of two-dimensional code information, bar code information, or Near Field Communication NFC information.

Optionally, the processor 830 is specifically configured to:
control the transceiver 820 to receive the second gateway access information entered by a user by using the mobile device.

Optionally, the processor 830 is specifically configured to:
control the transceiver 820 to receive the second gateway access information corresponding to a gateway selection instruction, where the gateway selection instruction is sent by a user by using the mobile device.

Optionally, the processor 830 is specifically configured to:
when the smart device is started again, access the first WiFi hotspot within a preset time period by using the first gateway access information.

Optionally, the processor 830 is specifically configured to:
control the memory 810 to store the second gateway access information; and
when the smart device is started again, if the smart device fails to access the first WiFi hotspot within a preset time period by using the first gateway access information, access the second WiFi hotspot by using the second gateway access information.

Related descriptions of FIG. 17 may be understood with reference to related descriptions and effects of the method in FIG. 2, and details are not described herein again.

An embodiment of the present invention provides another smart device, which is shown in FIG. 18. For ease of description, only a part related to this embodiment of the present invention is shown. For specific technical details that are not disclosed, refer to a method corresponding to this embodiment of the present invention. The terminal may be any terminal device, including: a mobile phone, a tablet computer, a personal digital assistant (Personal Digital Assistant, PDA), a point of sales (Point of Sales, POS), a vehicle-mounted computer, or the like, and for example, the terminal is a smart household.

FIG. 18 shows a block diagram of a partial structure of a smart household related to the terminal provided in this embodiment of the present invention. Referring to FIG. 18, the smart household includes components such as a radio frequency (Radio Frequency, RF) circuit 910, a memory 920, an input unit 930, a display unit 940, a sensor 950, an audio circuit 960, a Wireless Fidelity (wireless fidelity, WiFi) module 970, a processor 980, and a power supply 990. Persons skilled in the art may understand that the structure of the smart household shown in FIG. 18 does not constitute any limitation on the smart household, and instead, the smart household may include components more or fewer than those shown in the diagram, or combine some components, or have a different component arrangement.

The following describes the components of the smart household in detail with reference to FIG. 18.

The RF circuit 910 may be configured to: receive and send a signal in an information receiving or sending process or a call process, and in particular, after receiving downlink information of a base station, send the downlink information to the processor 980 for processing; and in addition, send uplink data of the smart household to the base station. Generally, the RF circuit 910 includes but is not limited to an antenna, at least one amplifier, a transceiver, a coupler, a low noise amplifier (Low Noise Amplifier, LNA), or a duplexer. In addition, the RF circuit 910 may further communicate with a network and another device by means of wireless communication. The wireless communication may use any communications standard or protocol, which includes but is not limited to a Global System for Mobile Communications (Global System of Mobile communication, GSM), a general packet radio service (General Packet Radio Service, GPRS), Code Division Multiple Access (Code Division Multiple Access, CDMA), Wideband Code Division Multiple Access (Wideband Code Division Multiple Access, WCDMA), Long Term Evolution (Long Term Evolution, LTE), an email, or a short message service (Short Messaging Service, SMS).

The memory 920 may be configured to store a software program and a module. The processor 980 runs the software program and the module that are stored in the memory 920, so as to perform various function applications of the smart household and data processing. The memory 920 may mainly include a program storage area and a data storage area. The program storage area may store an operating system, an application program (such as a sound play function or an image play function) that is required by at least one function, and the like. The data storage area may store data (such as audio data or a phonebook) that is created according to use of the smart household, and the like. In addition, the memory 920 may include a high-speed random access memory, and may further include a nonvolatile memory, such as at least one magnetic disk storage component, a flash memory component, or another volatile solid-state storage component.

The display unit 940 may be configured to display information entered by a user or information provided to a user, and various menus of the smart household. The display unit 940 may include a display panel 941. Optionally, the display panel 941 may be configured in a form of a liquid crystal display (Liquid Crystal Display, LCD), an organic light-emitting diode (Organic Light-Emitting Diode, OLED), or the like.

The smart household may further include at least one type of sensor 950, such as a light sensor, a motion sensor, or another sensor. Specifically, the light sensor may include an ambient light sensor and a proximity sensor. The ambient light sensor may adjust luminance of the display panel 941 according to brightness of ambient light, and the proximity sensor may turn off the display panel 941 and/or backlight when the smart household moves to an ear. As one type of a motion sensor, an accelerometer sensor may detect values of accelerations in all directions (generally, three axes), can detect a value and a direction of the gravity in a static state, and can be used for an application that identifies a smart household posture (such as screen orientation, a related game, or magnetometer posture calibration), a function related to vibration identification (such as a pedometer or a stroke), and the like. For another sensor, such as a gyroscope, a barometer, a hygrometer, a thermometer, or an infrared sensor, that can be further disposed on the smart household, details are not described herein.

The audio circuit 960, a loudspeaker 961, and a microphone 962 may provide an audio interface between the user and the smart household. The audio circuit 960 may transmit, to the loudspeaker 961, an electrical signal converted from received audio data, and the loudspeaker 961 converts the electrical signal into a sound signal for output. On the other hand, the microphone 962 converts a collected sound signal into an electrical signal, and the audio circuit 960 converts the electrical signal into audio data upon receipt of the electrical signal, and outputs the audio data to the processor 980 for processing. Then, the audio data is sent to, for example, another smart household, by using the RF circuit 910, or the audio data is output to the memory 920 for further processing.

WiFi belongs to a short-range wireless transmission technology. The smart household may help, by using the WiFi module 970, the user to receive and send an email, browse a web page, visit streaming media, and the like. The WiFi module 970 provides wireless broadband Internet access to the user. Although the WiFi module 970 is shown in FIG. 18, it may be understood that the WiFi module 970 is not a mandatory component of the smart household, and may be omitted according to a requirement without changing the essence of the present invention.

The processor 980 is a control center of the smart household and is connected to each part of the entire smart household by using various interfaces and lines, and by running or executing the software program or the software module or both that is stored in the memory 920 and by invoking data stored in the memory 920, performs various functions of the smart household and data processing, so as to perform overall monitoring on the smart household. Optionally, the processor 980 may include one or more processing units. Preferably, an application processor and a modulation and demodulation processor may be integrated into the processor 980. The application processor mainly processes an operating system, a user interface, an application program, and the like, and the modulation and demodulation processor mainly processes wireless communication. It may be understood that the modulation and demodulation processor may not be integrated into the processor 980.

The smart household further includes the power supply 990 (such as a battery) that supplies power to each component. Preferably, the power supply may be logically connected to the processor 980 by using a power management system, so as to implement a management function such as charging, discharging, and power consumption by using the power management system.

Though not shown, the smart household may further include a camera, a Bluetooth module, and the like, and details are not described herein.

In this embodiment of the present invention, the processor 980 included in the terminal further has the following functions:
controlling the WiFi module 970 to receive first gateway access information, where the first gateway access information is used by a mobile device to generate a corresponding first Wireless Fidelity WiFi hotspot;
when the smart device accesses the first WiFi hotspot by using the first gateway access information, controlling the WiFi module 970 to receive second gateway access information sent by the mobile device; and
accessing a second WiFi hotspot by using the second gateway access information.

Optionally, the processor 980 is further configured to:
control the input unit 930 to receive device identification information, where the device identification information includes the first gateway access information.

Optionally, the processor 980 is further configured to:
control the WiFi module 970 to receive the second gateway access information corresponding to a gateway selection instruction, where the gateway selection instruction is sent by a user by using the mobile device.

Optionally, the processor 980 is further configured to:
control the WiFi module 970 to receive the second gateway access information entered by a user by using the mobile device.

Optionally, the processor 980 is further configured to:
when the smart device is started again, access the first WiFi hotspot within a preset time period by using the first gateway access information.

Optionally, the processor 980 is further configured to:
store the second gateway access information; and
when the smart device is started again, if the smart device fails to access the first WiFi hotspot within a preset time period by using the first gateway access information, access the second WiFi hotspot by using the second gateway access information.

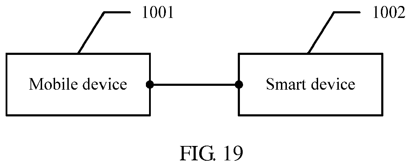

The following describes a system for controlling device access in the embodiments of the present invention. Referring to FIG. 19, a system for controlling device access in an embodiment of the present invention includes:
a mobile device 1001 and a smart device 1002.

The mobile device 1001 obtains first gateway access information of the smart device 1002. The mobile device 1001 generates a corresponding first Wireless Fidelity WiFi hotspot according to the first gateway access information. When the smart device 1002 accesses the first WiFi hotspot by using the first gateway access information, the mobile device 1001 sends second gateway access information to the smart device 1002, so that the smart device 1002 accesses a second WiFi hotspot by using the second gateway access information.

The mobile device 1002 receives the first gateway access information, where the first gateway access information is used by the mobile device 1001 to generate the corresponding first Wireless Fidelity WiFi hotspot. When the smart device 1002 accesses the first WiFi hotspot by using the first gateway access information, the smart device 1002 receives the second gateway access information sent by the mobile device 1001. The smart device 1002 accesses the second WiFi hotspot by using the second gateway access information.

In the embodiments of the present invention, a method for controlling a device to access a gateway is provided. A mobile device obtains first gateway access information of a smart device. The mobile device generates a corresponding WiFi hotspot according to the first gateway access information. When the smart device accesses a first WiFi hotspot by using the first gateway access information, the mobile device sends second gateway access information to the smart device, so that the smart device accesses a second WiFi hotspot by using the second gateway access information. By using the manner, a smart device can access a gateway. On one hand, a physical input apparatus does not need to be disposed on the smart device, and costs of the smart device are reduced. On the other hand, the smart device is connected to a second WiFi hotspot according to second gateway access information sent by a mobile device. A corresponding AP is not configured at the beginning, and there is no need to receive the second gateway access information in a broadcast manner either, so that a probability that gateway access information is maliciously intercepted is reduced.

It may be clearly understood by persons skilled in the art that, for the purpose of convenient and brief description, for a detailed working process of the system, apparatus, and unit, reference may be made to a corresponding process in the method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in practical implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on multiple network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The storage medium includes: any medium that can store program code, such as a USB flash drive, a removable hard disk, a read-only memory (Read-Only Memory, ROM for short), a random access memory (Random Access Memory, RAM for short), a magnetic disk, or an optical disc.

The embodiments are merely intended for describing the technical solutions of the present invention, but not for limiting the present invention. Although the present invention is described in detail with reference to the embodiments, persons of ordinary skill in the art should understand that they may still make modifications to the technical solutions described in the embodiments or make equivalent replacements to some technical features thereof, without departing from the scope of the technical solutions of the embodiments of the present invention.

## Claims

1. A method for controlling device access, comprising:
obtaining, by a mobile device, first gateway access information of a smart device;
generating, by the mobile device, a corresponding first Wireless Fidelity WiFi hotspot according to the first gateway access information; and
when the smart device accesses the first WiFi hotspot by using the first gateway access information, sending, by the mobile device, second gateway access information to the smart device, so that the smart device accesses a second WiFi hotspot by using the second gateway access information.

2. The method according to claim 1, wherein the obtaining, by a mobile device, first gateway access information of a smart device comprises:
identifying, by the mobile device, device identification information corresponding to the smart device, wherein the device identification information comprises the first gateway access information.

3. The method according to claim 1, wherein before the sending, by the mobile device, second gateway access information to the smart device, the method further comprises:
receiving, by the mobile device, the second gateway access information entered by a user.

4. The method according to claim 1, wherein before the sending, by the mobile device, second gateway access information to the smart device, the method further comprises:
receiving, by the mobile device, a gateway selection instruction sent by a user; and
determining, by the mobile device, the second gateway access information according to the gateway selection instruction.

5. The method according to claim 2, wherein the device identification information is at least one piece of two-dimensional code information, bar code information, or Near Field Communication NFC information.

6. A method for controlling device access, comprising:
receiving, by a smart device, first gateway access information, wherein the first gateway access information is used by a mobile device to generate a corresponding first Wireless Fidelity WiFi hotspot;
when the smart device accesses the first WiFi hotspot by using the first gateway access information, receiving, by the smart device, second gateway access information sent by the mobile device; and
accessing, by the smart device, a second WiFi hotspot by using the second gateway access information.

7. The method according to claim 6, wherein the receiving, by a smart device, first gateway access information comprises:
receiving, by the smart device, device identification information, wherein the device identification information comprises the first gateway access information.

8. The method according to claim 6, wherein the receiving, by the smart device, second gateway access information sent by the mobile device comprises:
receiving, by the smart device, the second gateway access information entered by a user by using the mobile device.

9. The method according to claim 6, wherein the receiving, by the smart device, second gateway access information sent by the mobile device comprises:
receiving, by the smart device, the second gateway access information corresponding to a gateway selection instruction, wherein the gateway selection instruction is sent by a user by using the mobile device.

10. The method according to any one of claims 6 to 9, wherein after the receiving, by the smart device, second gateway access information sent by the mobile device, the method further comprises:
when the smart device is started again, accessing, by the smart device, the first WiFi hotspot within a preset time period by using the first gateway access information.

11. The method according to any one of claims 6 to 9, wherein after the receiving, by the smart device, second gateway access information sent by the mobile device, the method further comprises:
storing, by the smart device, the second gateway access information; and
when the smart device is started again, if the smart device fails to access the first WiFi hotspot within a preset time period by using the first gateway access information, accessing, by the smart device, the second WiFi hotspot by using the second gateway access information.

12. A mobile device, comprising:
an obtaining module, configured to obtain first gateway access information of a smart device;
a generation module, configured to generate a corresponding first Wireless Fidelity WiFi hotspot according to the first gateway access information obtained by the obtaining module; and
a sending module, configured to: when the smart device accesses, by using the first gateway access information, the first WiFi hotspot generated by the generation module, send second gateway access information to the smart device, so that the smart device accesses a second WiFi hotspot by using the second gateway access information.

13. The mobile device according to claim 12, wherein the obtaining module comprises:
an identification unit, configured to identify device identification information corresponding to the smart device, wherein the device identification information comprises the first gateway access information.

14. The mobile device according to claim 12, wherein the mobile device further comprises:
a first receiving module, configured to: before the sending module sends the second gateway access information to the smart device, receive the second gateway access information entered by a user.

15. The mobile device according to claim 12, wherein the mobile device further comprises:
a second receiving module, configured to: before the sending module sends the second gateway access information to the smart device, receive a gateway selection instruction sent by a user; and
a determining module, configured to determine the second gateway access information according to the gateway selection instruction received by the second receiving module.

16. A smart device, comprising:
a first receiving module, configured to receive first gateway access information, wherein the first gateway access information is used by a mobile device to generate a corresponding first Wireless Fidelity WiFi hotspot;
a second receiving module, configured to: when the smart device accesses, by using the first gateway access information, the first WiFi hotspot received by the first receiving module, receive second gateway access information sent by the mobile device; and
a first access module, configured to access a second WiFi hotspot by using the second gateway access information received by the second receiving module.

17. The smart device according to claim 16, wherein the first receiving module comprises:
a receiving unit, configured to receive device identification information, wherein the device identification information comprises the first gateway access information.

18. The smart device according to claim 16, wherein the second receiving module comprises:
a first receiving unit, configured to receive the second gateway access information entered by a user by using the mobile device.

19. The smart device according to claim 16, wherein the second receiving module comprises:
a second receiving unit, configured to receive the second gateway access information corresponding to a gateway selection instruction, wherein the gateway selection instruction is sent by a user by using the mobile device.

20. The smart device according to any one of claims 16 to 19, wherein the smart device further comprises:
a second access module, configured to: after the second receiving module receives the second gateway access information sent by the mobile device, when the smart device is started again, access the first WiFi hotspot within a preset time period by using the first gateway access information.

21. The smart device according to any one of claims 16 to 19, wherein the smart device further comprises:
a storage module, configured to store the second gateway access information after the second receiving module receives the second gateway access information sent by the mobile device; and
a third access module, configured to: when the smart device is started again, if the smart device fails to access the first WiFi hotspot within a preset time period by using the first gateway access information, the second WiFi hotspot by using the second gateway access information stored in the storage module.

22. A mobile device, comprising: a memory, a transceiver, a processor, and a bus system, wherein
the memory is configured to store a program; and
the processor is configured to execute the program stored in the memory, and specific steps are as follows:
obtaining first gateway access information of a smart device;
generating a corresponding first Wireless Fidelity WiFi hotspot according to the first gateway access information; and
when the smart device accesses the first WiFi hotspot by using the first gateway access information, controlling the transceiver to send second gateway access information to the smart device, so that the smart device accesses a second WiFi hotspot by using the second gateway access information.

23. A smart device, comprising: a memory, a transceiver, a processor, and a bus system, wherein
the memory is configured to store a program;and
the processor is configured to control the transceiver to receive first gateway access information, wherein the first gateway access information is used by a mobile device to generate a corresponding first Wireless Fidelity WiFi hotspot;
the smart device accesses the first WiFi hotspot when the first WiFi hotspot is accessed by using the first gateway access information, control the transceiver to receive second gateway access information sent by the mobile device; and
access a second WiFi hotspot by using the second gateway access information.

24. A system for controlling device access, comprising: a mobile device and a smart device, wherein
the mobile device is the mobile device according to any one of claims 12 to 15; and
the smart device is the smart device according to any one of claims 16 to 21.
